# EUROPÄISCHE PATENTSCHRIFT

(11) **EP 2 153 183 B1**
(45) Veröffentlichungstag und Bekanntmachung des Hinweises auf die Patenterteilung: **11.05.2016**
(21) Anmeldenummer: 08717823.2
(22) Anmeldetag: 14.03.2008
(51) Int. Cl.: G01G 21/24, G01G 23/01, G01G 3/14

(54) **JUSTIERBARE PARALLELFÜHRUNG INSBESONDERE FÜR EIN GRAVIMETRISCHES MESSINSTRUMENT**
ADJUSTABLE PARALLELOGRAM GUIDE, IN PARTICULAR FOR A GRAVIMETRIC MEASURING INSTRUMENT
GUIDAGE DE PARALLÉLOGRAMME RÉGLABLE, EN PARTICULIER POUR UN INSTRUMENT DE MESURE GRAVIMÉTRIQUE

(30) Priorität: 01.06.2007 EP 07109474; 01.06.2007 EP 07109475
(43) Veröffentlichungstag der Anmeldung: 17.02.2010
(73) Patentinhaber: Mettler-Toledo GmbH, 8606 Greifensee (CH)
(72) Erfinder: BURKHARD, Hans-Rudolf, CH-8492 Wila (CH); GENOUD, Dominique, CH-4600 Olten (CH); METZGER, Andreas, CH-8708 Männedorf (CH); BALTISBERGER, Stephan, CH-8625 Gossau (CH); KÖPPEL, Thomas, CH-8618 Oetwil Am See (CH)
(86) Internationale Anmeldenummer: PCT/EP2008/053081
(87) Internationale Veröffentlichungsnummer: WO 2008/145426

(56) Entgegenhaltungen:
- EP-A2- 0 990 880
- WO-A-2005/031286
- DE-U1- 29 809 833
- JP-A- 2002 365 125

## Beschreibung

Die vorliegende Erfindung bezieht sich auf eine Parallelführung, insbesondere für ein gravimetrisches Messinstrument, wobei die Parallelführung einen feststehenden und einen beweglichen Parallelschenkel, sowie einen oberen und einen unteren Parallellenker aufweist. Eine von dem beweglichen Parallelschenkel getragene und vertikal geführte Waagschale nimmt die zu wägende Last auf, deren auf die Waagschale wirkende Kraft gegebenenfalls über einer kraftuntersetzende Hebelübertragung an einen Messaufnehmer übertragen wird. Die Parallelführung, das Kraftübertragungssystem und der Messaufnehmer bilden im Wesentlichen die Wägezelle eines gravimetrischen Messinstruments. Es sind im Stand der Technik verschiedene Funktionsprinzipien von Wägezellen bekannt, wie beispielsweise Wägezellen mit Dehnungsmessstreifen, Wägezellen mit Saiten oder EMFC-Wägezellen (Electro Magnetic Force Compensation).

Bei EMFC- Wägezellen wird das Gewicht der Last entweder direkt oder durch einen oder mehrere Kraftübertragungshebel in einen elektromechanischen Messaufnehmer übertragen, welcher ein dem Gewicht der Wägelast entsprechendes elektrisches Signal abgibt, das durch eine Wägeelektronik weiterverarbeitet und zur Anzeige gebracht wird.

Bei Wägezellen mit Dehnungs-Messwertaufnehmer ist ein Verformungskörper mit Dehnungsmessstreifen versehen. Dieser Verformungskörper wird durch die aufgelegte Last elastisch deformiert. Häufig wird der Verformungskörper als Messparallelogramm beziehungsweise als Parallelführung mit speziell ausgestalteten Biegestellen ausgestaltet, wodurch definierte Deformationsstellen geschaffen werden und in welchen Deformationsstellen beziehungsweise Biegestellen die Dehnungs-Messwertaufnehmer angeordnet sind. Die durch die Verformung des Deformationskörpers infolge einer Belastung des beweglichen Parallelschenkels gedehnten oder gestauchten Dehnungs- Messwertaufnehmer weisen einen vergleichsweise zum unbelasteten Zustand des beweglichen Parallelschenkels veränderten elektrischen Widerstandswert auf, welcher ein Mass für die aufgelegte Last ist.

Bei Saiten- Wägezellen entspricht der mechanische Aufbau weitgehend den EMFC- und DMS- Wägezellen, mit dem Unterschied, dass an Stelle eines elektromagnetischen Messwertaufnehmers ein Schwingsaiten-Messwertaufnehmer eingesetzt wird. Durch die Last wird eine schwingende Saite gespannt, deren Frequenzänderung wiederum ein Mass für die aufgelegte Last darstellt.

Ein Wesenszug der vorstehend beschriebenen Wägezellen, welcher im übrigen allen gravimetrischen Messinstrumenten mit parallel geführten Waagschalen gemeinsam ist, besteht darin, dass die von der Waagschale an den Messaufnehmer übertragene Gewichtskraft im allgemeinen geringfügig davon abhängt, ob die Wägelast zentrisch auf der Waagschale platziert ist oder aus der Mitte der Waagschale gegen den Rand verschoben ist. Dies kann die unerwünschte Folge haben, dass eine Waage für ein und dieselbe Wägelast verschiedene Gewichtsbeträge anzeigt, je nachdem wo die Wägelast auf der Waagschale platziert wurde. Diese Abweichungen bei exzentrischer Platzierung der Wägelast auf der Waagschale werden gemeinhin als Eckenlastfehler bezeichnet.

Bei einem Messparallelogramm beziehungsweise einer Parallelführung, das heisst einer Parallelführung des Waagschalenträgers mittels zweier parallelen, im Wesentlichen horizontalen Parallellenkern, werden Eckenlastfehler vorwiegend dadurch verursacht, dass diese Parallellenker von einer idealen, absoluten Parallelität geringfügig abweichen. Dabei entspricht die relative Grösse des Eckenlastfehlers, das heisst das Verhältnis der beobachteten Gewichtsabweichung zur Grösse des betreffenden Testgewichts etwa der den Fehler verursachenden relativen geometrischen Abweichung. Man unterscheidet zwischen einem Eckenlastfehler in der Längsrichtung und einem Eckenlastfehler in der Querrichtung der Parallelführung, entsprechend der Verschieberichtung des Testgewichts auf der Waagschale in der Eckenlastfehlerprüfung der Waage. Ein Eckenlastfehler in der Längsrichtung kommt daher, dass der vertikale Abstand der Parallellenker an dem zum feststehenden Parallelschenkel verbundenen Ende nicht genau gleich ist wie am andern, mit dem beweglichen Parallelschenkel verbundenen Ende. Ein Eckenlastfehler in der Querrichtung wird dagegen durch eine gegenseitige Verwindung der beiden Parallellenker gegeneinander verursacht, das heisst ein Zustand bei dem der Abstand zwischen den Parallellenkern über die Breite der Parallellenker variiert.

Im Stand der Technik, beispielsweise in der EP 0 990 880 A2, in der JP 2002 365125 A und in der WO 2005/031286 werden Parallelführungen von Wägezellen offenbart, welche eine Vorrichtung zur Justierung der Eckenlast aufweisen. Deren Einstellmechanismus ist derart konzipiert, dass der feststehende Parallelschenkel zwischen den Festlegungsstellen der Parallellenker mindestens eine Biegestelle aufweist, durch dessen Ausgestaltung eine Schwenkachse orthogonal zur Längsrichtung der Parallelführung definiert ist. Durch Verschwenken der Festlegungsstellen zueinander mittels einer Justierschraube, kann das mit dem feststehenden Parallelschenkel verbundene Ende des oberen Parallellenkers sowohl gehoben als auch gesenkt werden. Damit lässt sich der Eckenlastfehler in der Längsrichtung korrigieren. Je nach Ausgestaltung des Einstellmechanismus kann auch die Schwenkachse beziehungsweise die Festlegungsstelle in ihrer Querneigung verstellt werden, wodurch die Eckenlastfehler in der Querrichtung der Wägezelle korrigiert werden können. Um die Eckenlastfehler auszugleichen beziehungsweise die Parallellenker parallel zueinander auszurichten, müssen die Festlegungsstellen nur ausserordentlich geringfügig zueinander verschwenkt werden. Dadurch werden die Biegestellen ausschliesslich elastisch deformiert. Dies insbesondere auch deshalb, damit die Biegestellen unter Betriebsbelastungen nicht überbeansprucht werden und sich damit nicht plastisch deformieren. Die plastische Deformation der Biegestelle würde zur dauerhaften Verstellung der Lenkerparallelität führen und hätte negative Auswirkungen auf das Wägesignal. Ferner wird oft die aufgrund der elastischen Deformation der Biegestelle erzeugte Biegespannung und damit die Rückstellkraft der Biegestelle dazu verwendet, die Justierschraube einzuspannen und damit zu sichern.

Alle bekannten Justiervorrichtungen mit Justierschrauben haben somit gemeinsam, dass die einjustierte Lage mittels der Justierschrauben aufrechterhalten wird und damit die Biegestelle dauernd unter materialinternen Spannungen steht. Über längere Zeit kann deshalb eine alterungsbedingte Änderung in dieser Eckenlastjustierung durch Relaxation der mittels Justierschrauben in der einen oder andern Richtung elastisch verspannten Materialbereiche eintreten. Reversible, kurzzeitige Änderungen können durch Temperaturschwankungen verursacht werden, wenn der feststehende Parallelschenkel und die Justierschrauben voneinander verschiedene thermische Ausdehnungskoeffizienten aufweisen.

Um der vorangehend beschriebenen Problematik zu begegnen, ist im Stand der Technik eine weitere Justiermöglichkeit bekannt, welche ohne Justierschrauben auskommt. Bei Wägezellen, beispielsweise mit monolithisch konstruierter Parallelführung der Waagschale, wie sie in der US 62 32 567 B1 offenbart wird, kann die Parallelitätsabweichungen der Parallellenker und folglich die damit verbundenen Eckenlastfehler dadurch korrigiert werden, dass man an den Biegestellen der Parallellenker durch Schleifen oder Feilen Material abträgt. Ein Materialabtrag an der Oberseite hat die Wirkung, dass das effektive Drehzentrum des Biegelagers nach unten versetzt wird, während ein Materialabtrag an der Unterseite der Biegestelle deren effektives Drehzentrum nach oben versetzt.

Die Eckenlastfehlerjustierung durch Abtragen von Material an den Biegelagern einer Parallelführung ist problematisch bei Wägezellen, die für Präzisions- und Analysenwaagen, das heisst für kleine Wägelasten und hohe Auflösungen ausgelegt sind und daher dünne Biegelager aufweisen. Das Abschleifen oder Abfeilen von Material an einem dünnen Biegelager erfordert sehr viel Fingerspitzengefühl, weshalb diese Arbeit meistens manuell ausgeführt wird und dementsprechend kostenintensiv ist.

Im Hinblick auf diese unbefriedigenden Aspekte bei der Eckenlastjustierung in Parallelführungen gemäss dem bekannten Stand der Technik, wird bei der vorliegenden Erfindung die Aufgabe gestellt, in einer Parallelführung ein Mittel zur Eckenlastjustierung zu schaffen, welches die genannten Nachteile vermeidet und welches sich in einfacher und kostengünstiger Weise realisieren lässt.

Gelöst wird diese Aufgabe durch eine Parallelführung mit justierbaren Mitteln zur Einstellung der Lenkerparallelität gemäss dem Anspruch 1, sowie durch ein Verfahren gemäss dem Anspruch 18, mit dem die Eckenlastgenauigkeit der erfindungsgemässen Parallelführung justierbar ist. Vorteilhafte Weiterentwicklungen der Parallelführung gemäss vorliegender Erfindung werden in den übrigen Ansprüchen beschrieben.

Eine Parallelführung mit einem beweglichen Parallelschenkel, welcher durch zwei Parallellenker vertikal geführt mit einem feststehenden Parallelschenkel verbunden ist und an den Verbindungsstellen zwischen den Parallellenkern und den Parallelschenkeln elastische Biegelager oder elastische Parallellenkerabschnitte ausgebildet oder angeordnet sind, weist am feststehenden Parallelschenkel und/oder am beweglichen Parallelschenkel durch mindestens eine Aussparung gebildet, mindestens einen Justierbereich auf. Die den Justierbereich bildende mindestens eine Aussparung begrenzt mindestens eine Deformationsstelle, welche durch Einwirkung einer Justierkraft oder eines Justiermomentes in kontrollierter Weise plastisch verformt ist. Durch die plastische Verformung der mindestens einen Deformationsstelle ist eine gezielte, bleibende Änderung in der gegenseitigen Lage der Parallellenker erzeugt und dadurch ein Eckenlastfehler der Parallelführung korrigiert. Ferner wird durch die plastische Deformation erreicht, dass zumindest bei unbelastetem beweglichem Parallelschenkel die mindestens eine Deformationsstelle im justierten Zustand spannungsfrei ist.

Mit unbelastetem beweglichem Parallelschenkel ist gemeint, dass auch dessen Eigenmasse abgestützt ist, so dass keine Zugkräfte, Druckkräfte oder Biegemomente auf die elastischen Biegelager der Parallelführung einwirken, welche sich logischerweise auch in die Deformationsstelle fortsetzen können. Spannungsfrei bedeutet, dass die justierte, folglich plastisch deformierte Deformationsstelle frei von Materialspannungen ist.

Das vorstehend beschriebene erfindungsgemässe Konzept eines durch plastische Verformung einstellbaren Justierbereichs in einer Parallelführung erfüllt die oben gestellte Aufgabe. Umfassende Versuche haben gezeigt, dass nach der plastischen Deformation der Deformationsstelle augenblicklich ein Abbau (Relaxation) der vorhandenen Materialspannungen im deformierten Materialbereich eintritt und der deformierte Bereich damit eine hohe, fortwährende Formstabilität aufweist.

Der schnelle Abbau von Spannungen innerhalb des Materials führt auch zu einem ausserordentlich positiven Einfluss auf das Betriebsverhalten der Parallelführung. Materialinterne Spannungen, welche auf die elastischen Biegelager der Parallelführung einwirken, können nämlich deren elastisches Verhalten und damit das Wägeergebnis negativ beeinflussen. Durch den raschen Abbau von inneren Spannungen tritt somit auch keine Alterung der Justierung über eine lange Zeitperiode auf. Da keine Justierschrauben verwendet werden, gibt es auch keine Probleme infolge von unterschiedlichen Temperaturausdehnungskoeffizienten des Parallelkörpers und der Schrauben.

Selbstverständlich kann nach der Justierung der Parallelführung, beziehungsweise nach der Deformation der Deformationsstelle und nach der Relaxation der dadurch erzeugten Spannungen im Material die Deformationsstelle mit einem Fixiermittel gesichert werden. Dadurch kann die Parallelführung mechanisch sehr hoch belastet werden, ohne dass eine elastische oder gar eine erneute plastische Deformation der Deformationsstelle während des Betriebes der erfindungsgemässen Parallelführung eintritt. Damit unterscheidet sich auch diese Ausführung entscheidend von den im Stand der Technik bekannten Lösungen, bei welchen durch die Einstellschrauben elastische Spannungen im mindestens einen Deformationsbereich aufrecht erhalten werden.

Im Rahmen der vorliegenden Beschreibung beziehen sich Ausdrücke wie "oben", "unten", "horizontal", "vertikal" und dergleichen stets auf die Orientierung der Parallelführung im normalen Betriebszustand, mit anderen Worten auf die Richtung der Schwerkraft. Weiterhin werden die ausgedehnten vertikalen Begrenzungsflächen des Parallelkörpers als Seitenflächen, die von beiden Seitenflächen äquidistante Schnittfläche als vertikaler Mittellängsschnitt, die obere und untere horizontale Begrenzungsfläche als Ober- und Unterseite, die schmalseitige vertikale Begrenzungsfläche am beweglichen Parallelschenkel als vordere Endfläche, und die schmalseitige vertikale Begrenzungsfläche am feststehenden Parallelschenkel als hintere Endfläche bezeichnet.

Auch wenn die Deformationsstelle durch Aussparungen ausgebildet wird, heisst das nicht, dass die Deformationsstelle zwingend monolithisch aus dem feststehenden und/oder beweglichen Parallelschenkel herausgearbeitet sein muss. Die Deformationsstelle sowie die Parallelschenkel können auch aus mehren zusammengesetzten Einzelteilen bestehen. Um die weiter oben beschriebenen Probleme bezüglich thermisch verursachter Spannungen in der Parallelführung zu vermeiden, sind aber die Parallelschenkel vorzugsweise einstückig aufgebaut, an welchen beispielsweise mittels Fräsen, Sägen, Hobeln, Bohren, Drehen, Schneiden, Erodieren oder weiterer Bearbeitungsmethoden Aussparungen und damit mindestens eine Deformationsstelle erzeugt wird.

Die den Justierbereich bildenden Aussparungen reduzieren somit die Materialstärke des feststehenden Parallelschenkels und/oder des beweglichen Parallelschenkels an mindestens einer geeigneten Stelle. Eine geeignete Stelle bedeutet, dass sich die Parallellenker zueinander justieren lassen müssen, beispielsweise dass die mindestens eine Aussparung zwischen dem oberen Parallellenker und dem unteren Parallellenker angeordnet ist.

Zum Parallelschenkel gehören alle Teile, welche dem Verbinden des jeweiligen oberen und unteren Parallellenkers dienen, so dass diese gegeneinander abgestützt beziehungsweise voneinander distanziert sind.

In einer ersten Ausführung der Erfindung wird die mindestens eine Deformationsstelle durch horizontal durchsetzende Aussparungen ausgebildet. Durch Kraft- oder Momentanwendung kann eine Verschwenkung des Justierbereichs um die durch die Deformationsstelle in der Querrichtung der Parallelführung definierte Schwenkachse erzeugt werden. Das in den Justierbereich einmündende Ende eines der Parallellenker wird als Folge besagter Verschwenkung eine bleibende Verstellung in Vertikalrichtung erfahren, wodurch im Wesentlichen ein Eckenlastfehler bezüglich der Längsrichtung der Parallelführung korrigierbar ist.

Bei Belastungen des beweglichen Parallelschenkels entstehen Zugkräfte beziehungsweise Druckkräfte an den Parallellenkern. Die Schwenkachse der Deformationsstelle, auch als neutrale Faser bezeichnet, liegt deshalb vorzugsweise auf derselben horizontalen Ebene wie das in vertikaler Richtung zu verstellende elastische Biegelager. Durch diese vorteilhafte Anordnung werden Rückstellbiegemomente auf die Deformationsstelle weitgehend vermieden beziehungsweise auf ein vernachlässigbares Mass reduziert, da die Zugkräfte annähernd durch die neutrale Faser verlaufen. Die Eckenlastgenauigkeit kann dadurch lastunabhängig stabil gehalten werden.

In einer bevorzugten Weiterbildung der ersten Ausführung ist der Justierbereich an dem in den Justierbereich einmündenden und vertikal verstellbaren Ende des Parallellenkers von einer weiteren Aussparung durchsetzt, welche in der vertikalen Mittellängsschnittfläche des beweglichen Parallelschenkels oder des feststehenden Parallelschenkels verläuft und bis zum elastischen Biegelager geführt ist. Das Biegelager ist aber nicht geteilt. Durch die weitere Aussparung werden zwei getrennt nebeneinander liegende Justierbereiche mit getrennten Deformationsstellen gebildet, so dass:
- einerseits durch eine parallele Kraft- oder Momentanwendung an den zwei getrennten nebeneinander liegenden Justierbereichen und damit durch eine parallele Verschwenkung derselben, eine bleibende parallele Vertikalverstellung des elastischen Biegelagers erzeugt und dadurch ein Eckenlastfehler bezüglich der Längsrichtung der Parallelführung korrigiert werden kann und
- anderseits durch eine antiparallele Kraft- oder Momentanwendung an den zwei getrennten nebeneinander liegenden Justierbereichen und durch die dadurch verursachte entgegen gesetzte Verschwenkung der Justierbereiche eine bleibende Verwindung des verstellbaren Parallellenker-Endes erzeugt und dadurch ein Eckenlastfehler bezüglich der Querrichtung der Parallelführung korrigiert werden kann.

Diese Ausführung eignet sich insbesondere für Messparallelogramme mit Dehnungsmessstreifen im Bereich der elastischen Biegelager.

Es ist allgemein festzustellen, dass eine parallele, beziehungsweise eine gleich grosse und gleich gerichtete Verstellung an den beiden Justierbereichen vorwiegend den Eckenlastfehler in der Längsrichtung der Parallelführung beeinflusst, während eine antiparallele, d.h. gleich grosse aber entgegengesetzt gerichtete Verstellung an den beiden Justierbereichen vorwiegend den Eckenlastfehler in der Querrichtung der Parallelführung beeinflusst. Dabei kann jedoch eine gewisse gegenseitige Beeinflussung zwischen den beiden Richtungen auftreten, so dass eine parallele Verstellung auch in geringerem Mass den Eckenlastfehler in der Querrichtung und eine antiparallele Verstellung auch in geringerem Mass den Eckenlastfehler in der Längsrichtung beeinflussen kann.

Um eine Verwindung des Parallellenkers zusätzlich zu erleichtern, ist vorzugsweise bei Parallelführungen für hochauflösende gravimetrische Messinstrumente das elastische Biegelager an dem in den Justierbereich einmündenden und vertikal verstellbaren Ende des Parallellenkers mittels einer Weiterführung der weiteren Aussparung bis zum Parallellenker aufgespalten und dadurch wie der Justierbereich aufgetrennt. Das elastische Biegelager kann aber auch mittels einer Durchbrechung in zwei getrennte nebeneinander liegende elastische Biegelager aufgespalten sein und die weitere Aussparung in diese Durchbrechung münden.

In einer zweiten Ausführung der erfindungsgemässen Parallelführung wird in einer ersten horizontalen Ebene eine erste Deformationsstelle durch horizontal durchsetzende Aussparungen ausgebildet, so dass durch Kraft- oder Momentanwendung eine Verschwenkung des Justierbereichs um die durch die erste Deformationsstelle in der Querrichtung der Parallelführung definierte Schwenkachse erzeugt werden kann. Ferner ist in einer zweiten horizontalen Ebene, orthogonal zur Ausrichtung der ersten Deformationsstelle ausgerichtet, eine zweite Deformationsstelle durch horizontal durchsetzende Aussparungen ausgebildet, so dass durch Kraft- oder Momentanwendung eine Verschwenkung des Justierbereichs um die durch die zweite Deformationsstelle in der Längsrichtung der Parallelführung definierte Schwenkachse erzeugbar ist.

Auch wenn bevorzugt, müssen die Schwenkachsen beziehungsweise die Deformationsstellen und Aussparungen nicht zwingend in einer horizontalen Ebene angeordnet sein. Die die Schwenkachsen beziehungsweise die Deformationsstellen und Aussparungen enthaltenden Ebenen können auch unter einem beliebigen Winkel angeordnet sein, wobei die Ebenen nicht Parallel zur Vertikalen angeordnet sein dürfen, da sich bei vertikal verlaufenden Schwenkachsen die Parallellenker logischerweise nicht mehr gegeneinander justieren lassen.

In einer dritten Ausführung der erfindungsgemässen Parallelführung wird die mindestens eine Deformationsstelle durch eine am feststehenden Parallelschenkel und/oder am beweglichen Parallelschenkel umlaufende Aussparung ausgebildet. Die optimale Ausgestaltung der Querschnittfläche der Deformationsstelle kann mittels Versuchen ermittelt werden und ist abhängig von der Ausgestaltung der Parallelführung und dem plastischen Deformationsverhalten des in der Deformationsstelle verwendeten Materials. Annäherungsweise kann von einer Kreisfläche ausgegangen werden.

Sofern der mit der Deformationsstelle versehene Parallelschenkel von einer Bohrung durchdrungen ist, kann die Deformationsstelle auch eine kreisringförmige Querschnittsfläche aufweisen. Durch eine zum Schwerpunkt der Querschnittfläche versetzt angeordneten Bohrung kann das Flächenträgheitsmoment bezüglich der entsprechenden Schwenkachsen und damit das Biegeverhalten der Deformationsstelle um diese Schwenkachsen verändert werden.

Der mindestens eine Justierbereich kann in einem oberen Teil des feststehenden Parallelschenkels und/oder beweglichen Parallelschenkels ausgebildet sein, wodurch der obere Parallellenker an seinem in den mindestens einen Justierbereich einmündenden Ende verstellbar ist.

Der mindestens eine Justierbereich kann aber auch in einem unteren Teil des feststehenden Parallelschenkels und/ oder beweglichen Parallelschenkels ausgebildet sein, wodurch der untere Parallellenker an seinem in den mindestens einen Justierbereich einmündenden Ende verstellbar ist.

Ebenso ist eine Kombination möglich, so dass der obere Parallellenker durch einen am feststehenden Parallelschenkel ausgebildeten Justierbereich, und der untere Parallellenker durch einen am beweglichen Parallelschenkel ausgebildeten Justierbereich verstellbar sind, idealerweise mit orthogonal zueinander angeordneten Schwenkachsen.

Ferner muss die Parallelführung nicht zwingend quaderförmig ausgebildet sein. Der feststehende Parallelschenkel kann den beweglichen Parallelschenkel auch in mindestens in einer horizontalen Ebene umschliessen. Eine spezielle Ausführung dieses Konzepts ist, dass der feststehende Parallelschenkel rohrförmig ausgebildet ist und der bewegliche Parallelschenkel im innern des rohrförmig ausgebildeten Parallelschenkels angeordnet und linear geführt ist. Die Parallellenker einer solchen Parallelführung sind idealerweise Parallellenkermembranen, welche elastische Parallellenkerabschnitte aufweisen.

Vorzugsweise ist der mindestens eine Justierbereich mit mindestens einer Angriffsstelle zum Ansetzen eines Richtwerkzeugs, vorzugsweise einen Hebel, für die Erzeugung der Justierkraft oder des Justiermoments versehen.

Die mindestens eine Angriffsstelle kann auf einfache Weise als Bohrloch ausgebildet sein, in welches ein Stift des Richtwerkzeugs eingreifen kann.

Vorzugsweise sind die Parallelführung und gegebenenfalls weitere Kraftübertragungselemente einstückig aus einem Materialblock ausgebildet.

Die Parallelführung und die den Justierbereich bildenden Aussparungen können beispielsweise durch schmale, den Materialblock durchsetzende Trennschnitte ausgebildet sein.

Die nachfolgend kurz beschriebenen Abwandlungsformen der vorangehend beschriebenen Ausführungen sind ebenfalls als Bestandteil der vorliegenden Erfindung zu betrachten, da alle mindestens einen Justierbereich mit einer plastisch deformierbaren Deformationsstelle aufweisen.

Grundsätzlich kann davon ausgegangen werden, dass eine horizontale Anordnung der Schwenkachsen in den meisten Fällen vorzuziehen ist. Es ist aber denkbar, dass mittels winklig zu einer horizontalen Ebene angeordneten Schwenkachsen das Einstellverfahren vereinfacht werden kann oder dass bestimmte Ausführungen von Parallelführungen aufgrund ihrer Ausgestaltung winklig angeordnete Schwenkachsen erfordern.

Ferner können an jedem Parallelschenkel ein oder mehre Justierbereiche beziehungsweise Deformationsstellen ausgebildet sein. Ein Parallelschenkel muss auch nicht eine Einheit für sich bilden, sondern kann beispielsweise in senkrechter Richtung zweigeteilt sein, wie dies bei Parallelführungen mit dreieckigen Parallellenkern oft der Fall ist.

Um zu vermeiden, dass sich die plastisch deformierte Deformationsstelle unter Last elastisch und/oder plastisch deformiert, kann die mindestens eine Deformationsstelle mit mindestens einem Fixiermittel fixiert und gesichert sein.

Nachfolgend sind mögliche Verfahren angegeben, mit welchen die Eckenlastgenauigkeit einer Parallelführung mit mindestens einem durch Aussparungen ausgebildeten Justierbereich, welcher mindestens eine plastisch deformierbare Deformationsstelle aufweist, falls notwendig, durch Einwirkung einer Justierkraft oder eines Justiermomentes eine gezielte, bleibende Änderung in der gegenseitigen Lage der Parallellenker erreicht und in kontrollierter Weise eingestellt werden kann.

Das Verfahren zur Einstellung der Eckenlast einer Parallelführung mit zwei voneinander getrennten Justierbereichen kann folgende Verfahrensschritte aufweisen:

Zunächst wird die fertig montierte und betriebsfähige Wägezelle an ein dazu passendes Wägeelektronik- und Anzeigegerät angeschlossen. Im Rahmen eines festgelegten Justierverfahrens, das sich auch auf weitere Einstellungen wie zum Beispiel die Linearität und Empfindlichkeit erstrecken kann, wird ein Testgewicht auf dem Lastaufnehmer, beispielsweise einer flachen runden Waagschale von ungefähr demselben Durchmesser wie die Länge der Parallelführung, zwischen zwei einander diametral gegenüberliegenden Randpunkten in der Längsrichtung der Parallelführung verschoben und für die beiden Positionen das jeweils angezeigte Gewicht vom Anzeigegerät abgelesen und notiert. Dabei findet man normalerweise bei einer noch nicht justierten Parallelführung einen die Toleranzgrenze übersteigenden Unterschied zwischen den angezeigten Gewichtsbeträgen für die zwei Positionen. Um diesen Gewichtsanzeigeunterschied, das heisst den Eckenlastfehler in der Längsrichtung, auszugleichen, muss die Parallelität der Parallellenker in der Längsrichtung justiert werden, zum Beispiel indem man durch Ansetzen eines Richtwerkzeugs an den zwei Justierbereichen parallele, gleich grosse und gleich gerichtete plastische Deformationen der besagten schmalen Materialbereiche erzeugt, wobei die Grösse und der Richtungssinn der parallelen Deformationen von der Grösse und dem Vorzeichensinn des Eckenlastfehlers in der Längsrichtung abhängen und aufgrund von Berechnungen und/oder Versuchen in einer Justiervorschrift festgehalten sind. Daraufhin wird erneut der Eckenlastfehler in der Längsrichtung ermittelt und wenn nötig eine Nacheinstellung gemäss vorstehender Beschreibung gemacht, bis der Eckenlastfehler in der Längsrichtung innerhalb der vorgeschriebenen Toleranz liegt.

Vorzugsweise als nächster Schritt des Justierverfahrens wird das Testgewicht auf der Waagschale zwischen zwei einander diametral gegenüberliegenden Randpunkten in der Querrichtung der Parallelführung verschoben und in analoger Weise wie oben der Eckenlastfehler für die Querrichtung bestimmt. Um den Eckenlastfehler in der Querrichtung auszugleichen, muss die Orientierung des verstellbaren Parallellenkers in der Querrichtung justiert werden, zum Beispiel indem man durch Ansetzen eines Richtwerkzeugs an den zwei Justierbereichen antiparallele, das heisst gleich grosse aber entgegengesetzt gerichtete plastische Deformationen der besagten schmalen Materialbereiche erzeugt, wodurch das eine der durch einen Durchbruch getrennten Biegelager angehoben und das andere gesenkt wird, wobei die Grösse und der Richtungssinn dieser anti-parallelen Deformationen von der Grösse und dem Vorzeichensinn des Eckenlastfehlers in der Querrichtung abhängen. Daraufhin wird erneut der Eckenlastfehler in der Querrichtung ermittelt und wenn nötig eine Nacheinstellung gemäss vorstehender Beschreibung gemacht, bis der Eckenlastfehler in der Querrichtung innerhalb der vorgeschriebenen Toleranz liegt.

Zur Überprüfung, dass durch die Einstellung in der Querrichtung nicht wieder ein Eckenlastfehler in der Längsrichtung verursacht wurde, wird der Fehler für die Längsrichtung erneut ermittelt. Wenn beide Eckenlastfehler innerhalb der Toleranz liegen, ist das Verfahren abgeschlossen. Andernfalls wird eine den beobachteten Fehlern entsprechende Nacheinstellung vorgenommen, bis die Eckenlastfehler sowohl für die Längsrichtung als auch für die Querrichtung der Parallelführung innerhalb der Toleranz liegen.

In einem weiteren, möglichen Verfahren zur Einstellung der Eckenlast einer Parallelführung mit zwei voneinander getrennten Justierbereichen kann wie folgt vorgegangen werden:

Gleich wie bei der vorstehend beschriebenen Methode wird die fertig montierte und betriebsfähige Wägezelle an ein dazu passendes Wägeelektronik- und Anzeigegerät angeschlossen. Das beispielsweise der halben Wägekapazität der Wägezelle entsprechende Testgewicht wird auf dem Lastaufnehmer zwischen zwei einander diametral gegenüberliegenden Randpunkten in der Längsrichtung der Parallelführung verschoben, und aus den zugehörigen Gewichtsablesungen wird der Eckenlastfehler für die Längsrichtung ermittelt. Sodann wird das Testgewicht in der Querrichtung der Parallelführung verschoben und aus den zugehörigen Gewichtsablesungen der Eckenlastfehler für die Querrichtung ermittelt. Wenn der Eckenlastfehler sowohl für die Längsrichtung als auch für die Querrichtung innerhalb der Toleranz liegt, wird das Verfahren beendet. Andernfalls wird im nächsten Schritt eine Justiereinstellung für den grösseren der ermittelten Eckenlastfehler durchgeführt. Mit andern Worten: Wenn der Eckenlastfehler in der Längsrichtung grösser ist als in der Querrichtung der Parallelführung, erfolgt eine parallele Verstellung der beiden Justierbereiche. Wenn dagegen der Eckenlastfehler in der Querrichtung grösser ist als in der Längsrichtung der Parallelführung, erfolgt eine anti-parallele Verstellung der beiden Justierbereiche. Anschliessend werden wieder die Eckenlastfehler in beiden Richtungen ermittelt, das heisst der Justierzyklus schliesst sich und wird solange wiederholt bis der Eckenlastfehler sowohl für die Längsrichtung als auch für die Querrichtung innerhalb der Toleranz liegt. Dieses Justierverfahren, bei welchem immer nur der grössere der verbleibenden Eckenlastfehler korrigiert wird, berücksichtigt die gegenseitige Beeinflussung zwischen den Justierungen für die Längs- und Querrichtung, so dass dank der Konvergenz des Verfahrens die Eckenlastfehler nach wenigen Justierrunden verschwinden.

Für eine durch einen Rechner gestützte und gegebenenfalls automatisierte Eckenlastfehlerjustierung eignet sich das nachfolgend beschriebene dritte Verfahren. Das Verschieben des Testgewichts und/oder das Verstellen der zwei getrennten Justierbereiche kann dabei entweder manuell oder durch computergesteuerte Vorrichtungen erfolgen.

In einem ersten Schritt werden die vorhandenen Eckenlastfehler sowohl in der Längsals in der Querrichtung in einem an die Wägezellenelektronik angeschlossenen Rechner bestimmt und daraus die Beträge und Richtungen der erforderlichen Justiereinstellungen unter Berücksichtigung ihrer gegenseitigen Beeinflussung berechnet und gegebenenfalls angezeigt, woraufhin diese Einstellungen manuell oder automatisch vollzogen werden. Daraufhin kehrt das Verfahren zyklisch zum Anfang zurück, so dass die möglicherweise noch verbleibenden Eckenlastfehler in der Längs- und Querrichtung ermittelt werden können und falls sie innerhalb der Toleranz sind, wird der Vorgang beendet. Andernfalls wird erneut eine Justierung gemacht und der Zyklus solange wiederholt, bis die Eckenlastfehler innerhalb der festgesetzten Toleranz liegen.

Einzelheiten der erfindungsgemässen Parallelführung sowie des Verfahrens zu deren Justierung werden im Folgenden anhand der Zeichnungen gemäss nachstehender Übersicht näher erläutert.
- Figur 1: zeigt in schematisch vereinfachter Darstellung eine perspektivische Ansicht einer erfindungsgemässen Parallelführung in einer ersten Ausführung;
- Figur 2a: zeigt eine Detailansicht des Justierbereichs der Parallelführung von Figur 1 mit Blickrichtung von oben;
- Figur 2b: zeigt den Justierbereich von Figur 1 in einer seitlichen Ansicht nach erfolgter Justiereinstellung;
- Figur 3: zeigt in schematisch vereinfachter Darstellung eine perspektivische Ansicht einer erfindungsgemässen Parallelführung in einer zweiten Ausführung;
- Figur 4: zeigt in schematisch vereinfachter Darstellung eine perspektivische Ansicht einer erfindungsgemässen Parallelführung in einer dritten Ausführung;
- Figur 5: illustriert das erfindungsgemässe Prinzip der Eckenlastjustierung für eine Parallelführung und deren Einsatz in einem gravimetrischen Messinstrument;
- Figur 6: zeigt in schematisch vereinfachter Darstellung eine perspektivische Ansicht einer erfindungsgemässen Parallelführung, wobei der feststehende Parallelschenkel den beweglichen Parallelschenkel umschliesst.

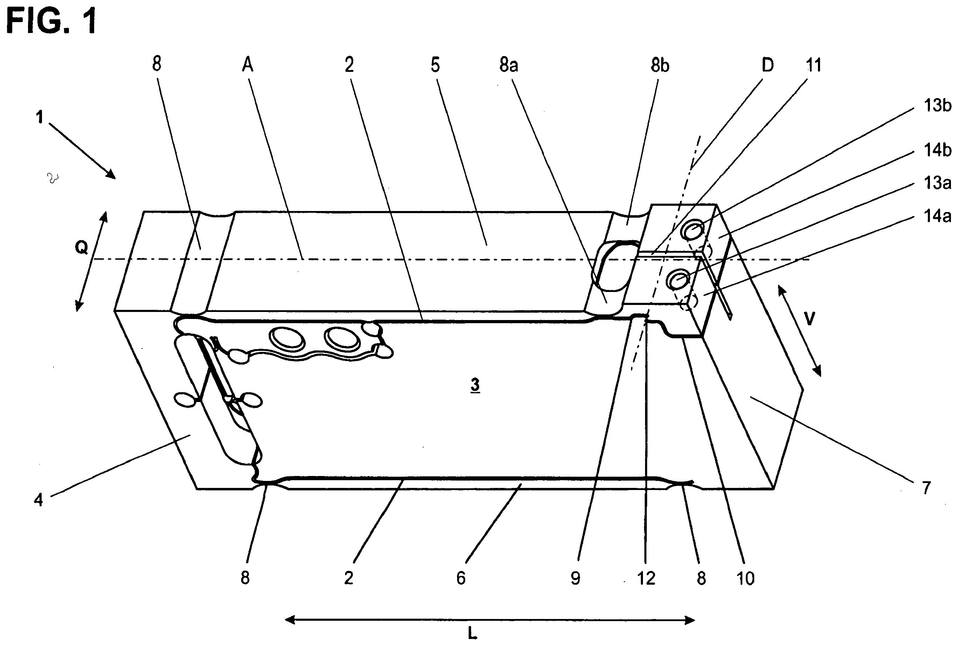

Figur 1 zeigt eine erfindungsgemässe Parallelführung 1, welche in einem monolithischen Materialblock 3 durch schmale Aussparungen 2, die den Materialblock 3 quer zu seinen Seitenflächen durchsetzen, gebildet wird. Als Resultat der Aussparungen ist ein beweglicher, mit einem Lastaufnehmer verbundener Parallelschenkel 4 vorhanden, welcher durch zwei im Wesentlichen horizontal ausgerichtete Parallellenker 5, 6 mit einem festen, gegen den Untergrund abgestützten Parallelschenkel 7 verbunden ist, wobei an den Enden der Parallellenker sogenannte Biegelager 8, 8a, 8b, das heisst elastisch biegsame Bereiche mit reduzierter Materialdicke ausgebildet sind. Insbesondere ist in dem monolithischen Materialblock 3 durch weitere Aussparungen 9, 10, 11 mindestens ein Justierbereich 14a, 14b ausgebildet, womit das mit dem feststehenden Parallelschenkel 7 verbundene Ende eines der beiden Parallellenker 5, 6, vorzugsweise des oberen Parallellenkers 5, sowohl bezüglich seines vertikalen Abstands von dem unteren Parallellenker 6 als auch bezüglich seiner Querneigung relativ zum unteren Parallellenker 6 verstellt werden kann, wodurch eine gegebenenfalls vorhandene Parallelitätsabweichung der Parallellenker 5, 6 sowohl in der Längsrichtung L als auch in der Querrichtung Q der Parallelführung durch Justieren korrigiert werden kann. Gemäss der Erfindung sind die weiteren, den Justierbereich 14a, 14b formenden Aussparungen 9 und 10 so ausgelegt, dass die Materialstärke des monolithischen Materialblocks 3 an geeigneten Stellen soweit reduziert wird, dass sich diese Deformationsstellen 12 durch Einwirkung einer Justierkraft oder eines Justiermomentes plastisch so verformen lassen, dass an dem in den Justierbereich 14a, 14b einmündenden Ende des verstellbaren Parallellenkers 5 eine bleibende Verschiebung in der Vertikalrichtung V und/oder Verdrehung um die Längsachse beziehungsweise Lagerachse A des Parallellenkers 5 resultiert.

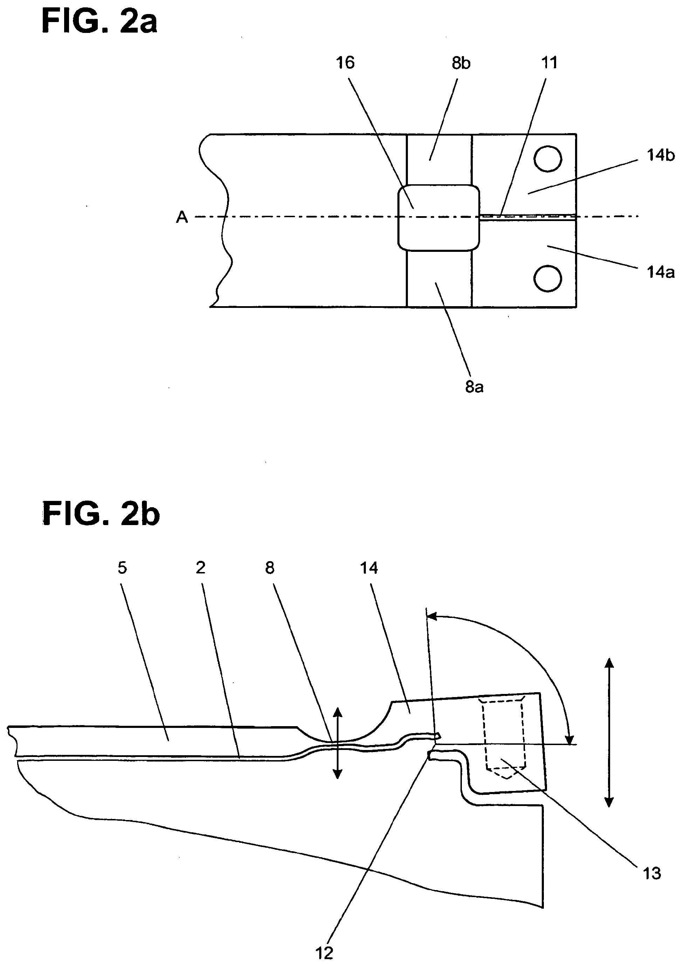

Figur 2a zeigt in einer Ansicht von oben, dass das Biegelager 8 an dem in den Justierbereich 14a, 14b einmündenden Ende eine Durchbrechung 16 aufweist und der Justierbereich durch einen Vertikalschnitt 11 durchtrennt wird, wodurch zwei getrennte Biegelager 8a, 8b entstehen, welche mit getrennten Justierbereichen 14a, 14b verbunden sind.

Figur 2b illustriert in einer seitlichen Ansicht wie durch ein Drehmoment, beispielsweise durch Eingriff eines Hebels in der Bohrung 13, eine geringfügige Verschwenkung des Justierbereichs 14 gemäss der Figur 1 um die Schwenkachse D der Deformationsstelle 12 erzeugt wird. Erfolgt die Verschwenkung im Gegenuhrzeigersinn, wird das elastische Biegelager 8 in der Figur 2b geringfügig tiefer gestellt.

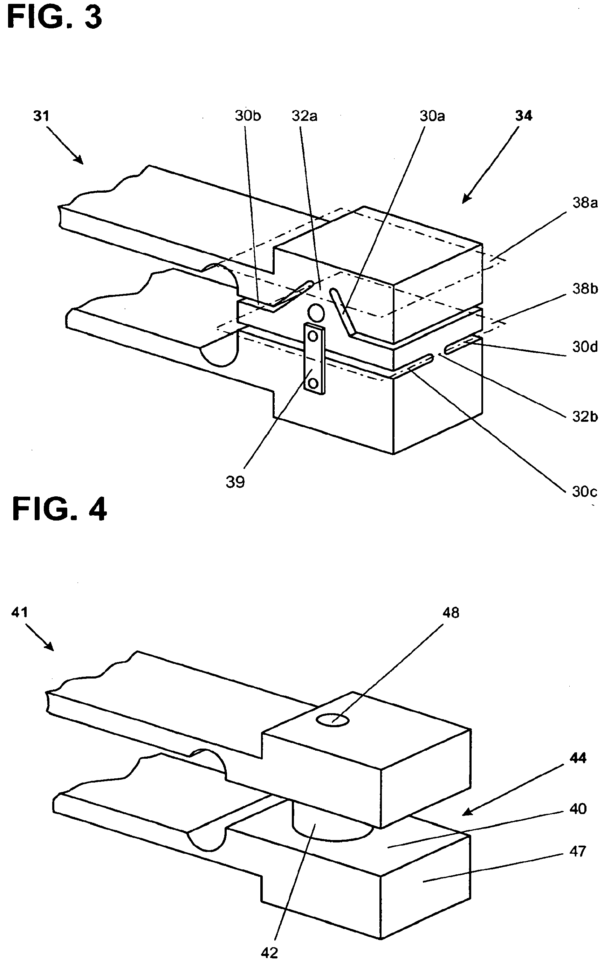

Figur 3 zeigt eine zweite Ausführung des Justierbereichs 34 einer Parallelführung 31 in dreidimensionaler Darstellung. Da im Wesentlichen eine andere Ausgestaltung des Justierbereichs 34 beschrieben wird, ist die Parallelführung 31 nur zur Hälfte dargestellt. In einer ersten horizontalen Ebene 38a ist eine erste Deformationsstelle 32a durch horizontal durchsetzende Aussparungen 30a, 30b ausgebildet, so dass durch Kraft- oder Momentanwendung eine Verschwenkung des Justierbereichs 34 um die durch die erste Deformationsstelle 32a in der Querrichtung der Parallelführung 31 definierte Schwenkachse erzeugt werden kann. Ferner ist in einer zweiten horizontalen Ebene 38b eine zweite Deformationsstelle 32b durch horizontal durchsetzende Aussparungen 30c, 30d ausgebildet welche orthogonal zur Ausrichtung der ersten Deformationsstelle 32a ausgerichtet ist, so dass durch Kraft- oder Momentanwendung eine Verschwenkung des Justierbereichs 31 um die durch die zweite Deformationsstelle 32b in der Längsrichtung der Parallelführung 31 definierte Schwenkachse erzeugbar ist.

Wie in Figur 3 dargestellt, kann nach der Justierung der Parallelführung 31, beziehungsweise nach der Deformation der ersten Deformationsstelle 32a und/oder der zweiten Deformationsstelle 32b, diese mit einem Fixiermittel 39 gesichert werden. Dadurch kann die Parallelführung 31 mechanisch sehr hoch belastet werden, ohne dass eine elastische oder gar eine erneute plastische Deformation der Deformationsstellen 32a, 32b während des Betriebes der Parallelführung 31 eintritt. Selbstverständlich kann jede Deformationsstelle der in den Figuren 1 bis 6 dargestellten Ausführungsvarianten mit je mindestens einem Fixiermittel 39 gesichert werden.

Anders als bei den im Stand der Technik bekannten Lösungen, bei welchen durch die Einstellschrauben elastische Spannungen aufrecht erhalten werden, sind bei einer derart fixierten Parallelführung 31 nahezu keine Materialspannungen im Bereich der Deformationsstellen 32a, 32b vorhanden. Das als Lasche dargestellte Fixiermittel 39 ist nur eine Möglichkeit, die Deformationsstellen 32a, 32b dauerhaft zu fixieren und zu sichern. Selbstverständlich sind eine Vielzahl von Fixiermitteln wie Keile, Schrauben, Bolzen, Platten und dergleichen verwendbar. Um elastische oder gar plastische Deformationen infolge unterschiedlicher Wärmeausdehnungen zu vermeiden, ist das Fixiermittel 39 vorzugsweise aus demselben Material wie der zu sichernde Parallelschenkel gefertigt.

Figur 4 zeigt eine dritte Ausführung des Justierbereichs 44 einer Parallelführung 41 in dreidimensionaler Darstellung. Da im Wesentlichen eine andere Ausgestaltung des Justierbereich 44 beschrieben wird, ist die Parallelführung 41 nur zur Hälfte dargestellt. Die mindestens eine Deformationsstelle 42 wird durch eine am feststehenden Parallelschenkel 47 umlaufende, nutförmige Aussparung 40 ausgebildet. Die optimale Ausgestaltung der Querschnittfläche der Deformationsstelle 42 in einer horizontalen Ebene kann mittels Versuchen ermittelt werden und ist abhängig von der Ausgestaltung der Parallelführung 41 und dem plastischen Deformationsverhalten des die Deformationsstelle 42 bildenden Materials. Annäherungsweise kann von einer Kreisfläche ausgegangen werden. Da die Deformationsstelle 42, wie in Figur 4 schematisch dargestellt, zylinderförmig ausgebildet ist, wird im Vergleich zur Figur 3 die Ausrichtung der Schwenkachse nicht definiert. Die Wahl der Schwenkachse, um welche verschwenkt werden soll, wird erst beim Justiervorgang aufgrund der gemessenen Abweichungen festgelegt. Selbstverständlich kann mittels einer Einschnürung an der zylinderförmigen Deformationsstelle 42 die vertikale Lage der Schwenkachse definiert werden. Sofern der mit der Deformationsstelle 42 versehene Parallelschenkel 47 von einer Bohrung 48 durchdrungen ist, kann die Deformationsstelle 42 auch eine kreisringförmige Querschnittsfläche aufweisen. Durch eine zum Schwerpunkt der Querschnittfläche versetzt angeordneten Bohrung 48 kann das Flächenträgheitsmoment bezüglich der entsprechenden Schwenkachsen und damit das Biegeverhalten der Deformationsstelle 42 um diese Schwenkachsen verändert werden.

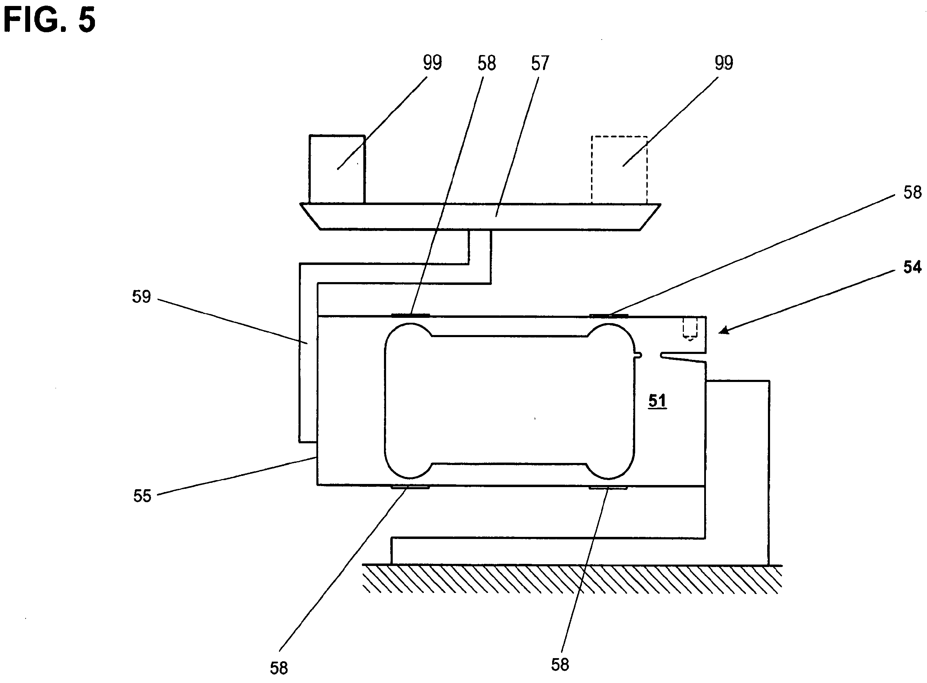

Schliesslich illustriert Figur 5 in grob schematisierter Weise den Begriff Eckenlastfehler. An die Parallelführung 51, hier als Verformungskörper mit Dehnungsmessstreifen 58 schematisch dargestellt, ist auf der Seite des beweglichen Parallelschenkels 55 über einen Träger 59 eine Waagschale 57 befestigt. Wie bereits vorangehend in Figur 1 bis Figur 4 ausführlich beschrieben, verfügt auch dieser Verformungskörper 51 über einen erfindungsgemäss ausgestalteten Justierbereich 54. Ein Testgewicht 99, typischerweise der halben Wägekapazität der Wägezelle entsprechend, wird beispielsweise zuerst in der linksseitigen Position und anschliessend in der rechtsseitigen (gestrichelt gezeichneten) Position gewogen. Die Differenz der in den beiden Positionen angezeigten Wägeresultate wird als Eckenlastabweichung in der Längsrichtung der Parallelführung 51 bezeichnet. Ein analoger Wägetest in der zur Zeichenebene orthogonalen Richtung, wobei die beiden Positionen des Testgewichts 99 vor und hinter der Zeichenebene auf dem Durchmesser der Waagschale 57 liegen, liefert die Eckenlastabweichung in der Querrichtung.

Selbstverständlich muss die erfindungsgemässe Parallelführung nicht zwingend eine quaderförmige Ausgestaltung aufweisen.

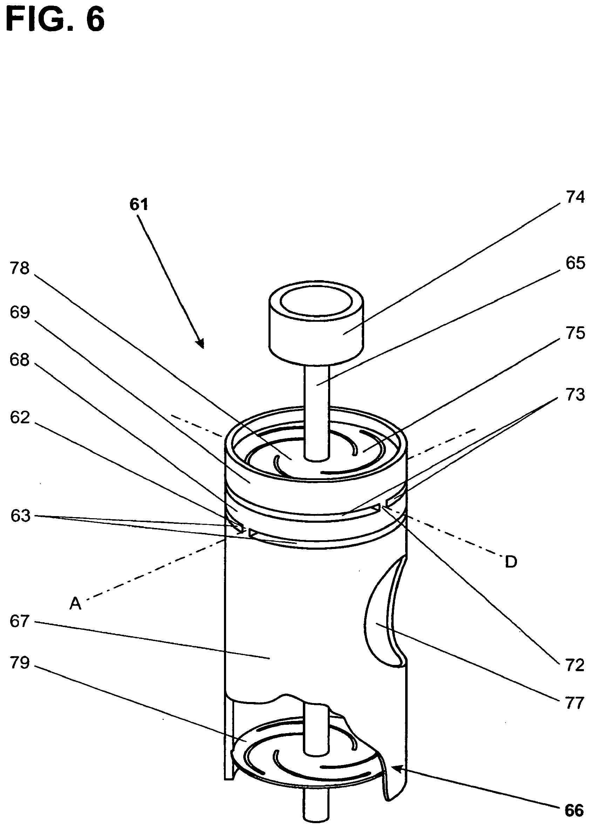

Figur 6 zeigt in dreidimensionaler Darstellung ein gravimetrisches Messinstrument mit einer erfindungsgemässen Parallelführung 61. Man erkennt den feststehenden Parallelschenkel 67, welcher einen beweglichen Parallelschenkel 65 umfasst. Die ganze Parallelführung 61 ist rotationssymmetrisch ausgebildet. Das obere Ende des feststehenden Parallelschenkels 67 ist mit ersten horizontalen Aussparungen 73 versehen, welche den feststehenden Parallelschenkel 67 bis nahe zu einem Durchmesser durchtrennen, so dass nur zwei diametral gegenüberliegende Materialbrücken (nur eine davon in der Figur 6 sichtbar) als Deformationsstellen 72 stehenbleiben. Unterhalb der ersten horizontalen Aussparungen 73 liegen, um 90º versetzt, die zweiten horizontalen Aussparungen 63 und die sich auf dem Durchmesser diametral gegenüberliegenden Deformationsstellen 62 (nur eine davon in der Figur 6 sichtbar). Eine Öffnung 77 im feststehenden Parallelschenkel 67 gibt Zugang zum Zwischenraum im Innern des feststehenden Parallelschenkels 67, beispielsweise zu einer dort angeordneten Kraftmesszelle (in der Figur 6 nicht sichtbar). Durch die Deformationsstellen 62 und 72 und den dazwischen liegenden Ringbereich 68 wird eine quasi- kardanische Lagerung eines ringförmigen Endbereichs 69 des feststehenden Parallelschenkels 67 gebildet. Der ringförmige Endbereich 69 bildet die Randeinfassung eines membranförmig ausgebildeten oberen Parallellenkers 78. Im Innern des unteren Endbereichs 66 des feststehenden Parallelschenkels 67 ist in analoger Weise der untere Parallellenker 79 eingefasst. Der im feststehenden Parallelschenkel 67 zentrisch angeordnete, vertikal bewegliche Parallelschenkel 65 ist mit den beiden Parallellenkern 78 und 79 verbunden. Die Parallellenker 78 und 79 weisen elastische Parallellenkerabschnitte 75 auf, durch welche der vertikal bewegliche Parallelschenkel 65 innerhalb eines beschränkten vertikalen Bewegungsspielraums geführt ist. Der vertikale bewegliche Parallelschenkel 65 bildet zudem das Kraftübertragungsglied zwischen einer Waagschale 74 und der im Innern des feststehenden Parallelschenkels 67 befindlichen Kraftmesszelle.

Abgesehen davon, dass die durch die Deformationsstellen 62, 72 definierten Schwenkachsen in verschiedenen Horizontalebenen liegen, besteht in dieser Anordnung sowohl geometrisch als auch in mechanischer Hinsicht bezüglich ihres Justierverhaltens kein Unterschied zu den vorangehend beschriebenen Ausführungsbeispielen. Ein Eckenlastfehler wird dadurch korrigiert, dass der ringförmige Endbereich 69 verschwenkt wird. Die Verschwenkung beziehungsweise die plastische Deformation der Deformationsstellen erfolgt mittels eines Stellmittels, beispielsweise mit einem Schraubenzieher. Dessen Spitze wird in mindestens eine der Aussparungen 63, 73 gesteckt und die Aussparung soweit aufgespreizt, bis eine plastische Verformung der Deformationsstellen 62, 72 erfolgt. Zwischen der algebraischen Grösse (Betrag und Vorzeichen) einer Eckenlastfehlerkomponente und der zur Korrektur benötigten Verschwenkung, das heisst der Grösse und Richtung des Schwenkwinkels besteht ein für die gegebene Wägemodulkonstruktion spezifischer und reproduzierbarer Zusammenhang, welcher in der Entwicklung des Wägemoduls durch empirische Versuche und/oder analytische Berechnungen ermittelt wird.

Wenn beispielsweise bei der in der Figur 6 abgebildeten Parallelführung 61 bei einer Verschiebung eines Testgewichts in Richtung der Schwenkachse Q von links nach rechts eine negative Eckenlastabweichung gefunden wird (das heisst, dass der angezeigte Gewichtsbetrag bei der rechtsseitigen Gewichtsposition kleiner ist als bei der linksseitigen Position), so kann dies durch eine vom Betrag des Fehlers abhängige, bleibend deformierte Verschwenkung bezüglich der Schwenkachse D im Gegenuhrzeigersinn korrigiert werden.

### Bezugszeichenliste

- 61, 51, 41, 31, 1: Parallelführung
- 2: schmale Aussparung
- 3: monolithischer Materialblock
- 65, 55, 4: beweglicher Parallelschenkel
- 78, 5: oberer Parallellenker
- 79, 6: untere Parallellenker
- 67, 47, 7: feststehender Parallelschenkel
- 8, 8a, 8b: elastische Biegelager
- 73, 63, 40, 30a,b,c,d, 11, 10, 9: Aussparung
- 72, 62, 42, 32a, 32b, 12: Deformationsstelle
- 13a, 13b: Bohrungen, Angriffsstellen für Richthebel
- 54, 44, 34, 14a, 14b: Justierbereiche
- 16: Durchbrechung
- 38a, 38b: horizontale Ebene
- 39: Fixiermittel
- 40: umlaufende Aussparung
- 48: Bohrung
- 74, 57: Waagschale
- 58: Dehnungsmessstreifen
- 59: Waagschalenträger
- 66: unterer Endbereich
- 68: Ringbereich
- 69: ringförmiger Endbereich
- 75: elastischer Parallellenkerabschnitt
- 77: Öffnung
- 99: Testgewicht
- A: Längsachse
- D: Schwenkachse
- L: Längsrichtung des Parallelführung
- Q: Querrichtung des Parallelführung, Schwenkachse
- V: Vertikalrichtung im Betriebszustand

## Patentansprüche

1. Parallelführung (1, 31, 41, 51, 61) mit einem beweglichen Parallelschenkel (4, 55, 65), welcher durch zwei Parallellenker (5, 6, 78, 79) vertikal geführt mit einem feststehenden Parallelschenkel (7, 67) verbunden ist, wobei an den Verbindungsstellen zwischen den Parallellenkern (5, 6, 78, 79) und den Parallelschenkeln (4, 7, 65, 67) elastische Biegelager (8, 8a, 8b) oder elastische Parallellenkerabschnitte (75) ausgebildet oder angeordnet sind, am feststehenden Parallelschenkel (7, 67) und/oder am beweglichen Parallelschenkel (4, 55, 65) durch mindestens eine Aussparung (9, 10, 11, 30a, 30b, 30c, 30d, 40, 63, 73) mindestens ein Justierbereich (14, 14a, 14b, 34, 44, 54) ausgebildet ist und wobei mindestens eine Aussparung (9, 10, 11, 30a, 30b, 30c, 30d, 40, 63, 73) mindestens eine Deformationsstelle (12, 32a, 32b, 42, 62, 72) begrenzt, **dadurch gekennzeichnet, dass**
• die mindestens eine Deformationsstelle (12, 32a, 32b, 42, 62, 72) durch die Einwirkung einer Justierkraft oder eines Justiermomentes in kontrollierter Weise plastisch verformt ist,
• durch die plastische Verformung der mindestens einen Deformationsstelle (12, 32a, 32b, 42, 62, 72) eine gezielte bleibende Änderung in der gegenseitigen Lage der Parallellenker (5, 6, 78, 79) zur Korrektur eines Eckenlastfehlers der Parallelführung (1, 31, 41, 51, 61) erzeugt ist und
• zumindest bei unbelastetem beweglichen Parallelschenkel (4, 55, 65) die mindestens eine Deformationsstelle (12, 32a, 32b, 42, 62, 72) im justierten Zustand spannungsfrei ist.

2. Parallelführung (1, 31, 41, 51, 61) nach Anspruch 1, **dadurch gekennzeichnet, dass** die den Justierbereich (14, 14a, 14b, 34, 44, 54) bildenden Aussparungen (9, 10, 11, 30a, 30b, 30c, 30d, 40, 63, 73) die Materialstärke des feststehenden Parallelschenkels (7, 67) und/oder des beweglichen Parallelschenkels (4, 74) an mindestens einer geeigneten Stelle reduzieren.

3. Parallelführung (1, 31, 41, 51) nach Anspruch 1 oder 2, **dadurch gekennzeichnet, dass** die mindestens eine Deformationsstelle (12, 32a, 32b, 42) durch den Parallelschenkel (4, 7) horizontal durchsetzende Aussparungen (9, 10, 30a, 30b, 30c, 30d, 40) ausgebildet ist, dass durch Kraft- oder Momentanwendung eine Verschwenkung des Justierbereichs (14, 14a, 14b, 34, 44, 54) um die durch die Deformationsstelle (12, 32a, 32b, 42) in der Querrichtung (Q) der Parallelführung (1) definierte Schwenkachse (D) erzeugbar ist, wobei das in den Justierbereich (14, 14a, 14b, 34, 44, 54) einmündende Ende eines der Parallellenker (5, 6) als Folge besagter Verschwenkung eine bleibende Verstellung in Vertikalrichtung (V) erfährt, wodurch im Wesentlichen ein Eckenlastfehler bezüglich der Längsrichtung (L) der Parallelführung (1, 31, 41, 51) korrigierbar ist.

4. Parallelführung (1, 31, 41, 51) nach Anspruch 3, **dadurch gekennzeichnet dass** die Schwenkachse (D) der Deformationsstelle (12) auf derselben horizontalen Ebene wie das in vertikaler Richtung zu verstellende elastische Biegelager (8, 8a, 8b) angeordnet ist.

5. Parallelführung (1) nach einem der Ansprüche 1 bis 4, **dadurch gekennzeichnet, dass** der Justierbereich (14) an dem in den Justierbereich (14) einmündenden und vertikal verstellbaren Ende des Parallellenkers (5) von einer weiteren Aussparung (11) durchsetzt ist, welche in der vertikalen Mittellängsschnittfläche des beweglichen Parallelschenkels (4) oder des feststehenden Parallelschenkels (7) verläuft und bis zum elastischen Biegelager geführt ist, wobei durch die weitere Aussparung (11) zwei getrennte nebeneinander liegende Justierbereiche (14a, 14b) mit getrennten Deformationsstellen (12a, 12b) gebildet werden, so dass:
• einerseits durch eine parallele Kraft- oder Momentanwendung an den zwei getrennten nebeneinander liegenden Justierbereichen (14a, 14b), und damit eine parallele Verschwenkung derselben, eine bleibende parallele Vertikalverstellung des elastischen Biegelagers (8) erzeugbar und dadurch ein Eckenlastfehler bezüglich der Längsrichtung (L) der Parallelführung korrigierbar ist; und
• andererseits durch eine antiparallele Kraft- oder Momentanwendung an den zwei getrennten nebeneinander liegenden Justierbereichen (14a, 14b) und die dadurch verursachte entgegen gesetzte Verschwenkung der Justierbereiche (14a, 14b), eine bleibende Verwindung des verstellbaren Parallellenker-Endes erzeugbar ist und dadurch ein Eckenlastfehler bezüglich der Querrichtung (Q) der Parallelführung korrigierbar ist.

6. Parallelführung (1) nach Anspruch 5, **dadurch gekennzeichnet, dass** das elastische Biegelager (8) an dem in den Justierbereich (14) einmündenden und vertikal verstellbaren Ende des Parallellenkers (5) mittels der Weiterführung der weiteren Aussparung (11) bis zum Parallellenker (5) oder mit einer Durchbrechung (16) versehen, in zwei getrennte nebeneinander liegende elastische Biegelager (8a, 8b) aufgespalten ist.

7. Parallelführung (31) nach Anspruch 1 oder 2, **dadurch gekennzeichnet, dass** in einer ersten horizontalen Ebene (38a) eine erste Deformationsstelle (32a) durch horizontal durchsetzende Aussparungen (30a, 30b) ausgebildet ist, so dass durch Kraft- oder Momentanwendung eine Verschwenkung des Justierbereichs (34) um die durch die erste Deformationsstelle (32a) in der Querrichtung (Q) der Parallelführung (31) definierte Schwenkachse (D) erzeugbar ist, und dass in einer zweiten horizontalen Ebene, orthogonal zur Ausrichtung der ersten Deformationsstelle (32a) ausgerichtet, eine zweite Deformationsstelle (32b) durch horizontal durchsetzende Aussparungen (30c, 30d) ausgebildet ist, so dass durch Kraft- oder Momentanwendung eine Verschwenkung des Justierbereichs (34) um die durch die zweite Deformationsstelle (32b) in der Längsrichtung (L) der Parallelführung (31) definierte Schwenkachse (A) erzeugbar ist.

8. Parallelführung (61) nach Anspruch 1 oder 2, **dadurch gekennzeichnet, dass** der feststehende Parallelschenkel (67) den beweglichen Parallelschenkel (65) mindestens in einer horizontalen Ebene umschliesst.

9. Parallelführung (41, 61) nach einem der Ansprüche 1, 2 oder 8, **dadurch gekennzeichnet, dass** die mindestens eine Deformationsstelle (42, 62, 72) durch eine am feststehenden Parallelschenkel (47, 67) und/oder am beweglichen Parallelschenkel (65) umlaufende Aussparung (40) ausgebildet ist.

10. Parallelführung (1, 31, 41, 51, 61) nach einem der Ansprüche 1 bis 9, **dadurch gekennzeichnet, dass** der mindestens eine Justierbereich (14, 14a, 14b, 34, 44, 54) in einem oberen Teil des feststehenden Parallelschenkels (7, 67) und/ oder beweglichen Parallelschenkels (4, 65) ausgebildet ist, wodurch der obere Parallellenker (5, 78) an seinem in den mindestens einen Justierbereich (14, 14a, 14b, 34, 44, 54) einmündenden Ende verstellbar ist.

11. Parallelführung (1, 31, 41, 51, 61) nach einem der Ansprüche 1 bis 10, **dadurch gekennzeichnet, dass** der mindestens eine Justierbereich (14, 14a, 14b, 34, 44, 54) in einem unteren Teil des feststehenden Parallelschenkels (7, 67) und/ oder beweglichen Parallelschenkels (4, 65) ausgebildet ist, wodurch der untere Parallellenker (6, 79) an seinem in den mindestens einen Justierbereich (14, 14a, 14b, 34, 44, 54) einmündenden Ende verstellbar ist.

12. Parallelführung (1, 31, 41, 51, 61) nach einem der Ansprüche 1 bis 11, **dadurch gekennzeichnet, dass** der mindestens eine Justierbereich (14, 14a, 14b, 34, 44, 54) mit mindestens einer Angriffsstelle zum Ansetzen eines Richtwerkzeugs, vorzugsweise eines Hebels, für die Erzeugung der Justierkraft oder des Justiermoments versehen ist.

13. Parallelführung (1, 31, 41, 51, 61) nach Anspruch 12, **dadurch gekennzeichnet, dass** die mindestens eine Angriffsstelle als Bohrloch (13a, 13b, 48) ausgebildet ist, in welches ein Stift des Richtwerkzeugs eingreifen kann.

14. Parallelführung (1, 31, 41, 51, 61) nach einem der Ansprüche 1 bis 13, **dadurch gekennzeichnet, dass** die Parallelführung (1, 31, 41, 51, 61) und gegebenenfalls Kraftübertragungselemente einstückig aus einem Materialblock (3) ausgebildet sind.

15. Parallelführung (1, 31, 41, 51, 61) nach Anspruch 14, **dadurch gekennzeichnet, dass** die Parallelführung (1, 31, 41, 51, 61) und die den Justierbereich (14, 14a, 14b, 34, 44, 54) bildenden Aussparungen (9, 10, 11, 30a, 30b, 30c, 30d, 63, 73) durch schmale Trennschnitte ausgebildet sind.

16. Parallelführung (1, 31, 41, 51, 61) nach einem der Ansprüche 1 bis 13, **dadurch gekennzeichnet, dass** die mindestens eine Deformationsstelle (12, 32a, 32b, 42, 62, 72) mit mindestens einem Fixiermittel (39) fixiert und gesichert ist.

17. Gravimetrisches Messinstrument mit einer Parallelführung (1, 31, 41, 51, 61) nach einem der Ansprüche 1 bis 16.

18. Verfahren zur Justierung der Eckenlastgenauigkeit einer Parallelführung (1, 31, 41, 51, 61) mit einem beweglichen Parallelschenkel (4, 65), welcher durch zwei Parallellenker (5, 6, 78, 79) vertikal geführt mit einem feststehenden Parallelschenkel (7, 67) verbunden ist, wobei an den Verbindungsstellen zwischen den Parallellenkern (5, 6, 78, 79) und den Paralleischenkeln (4, 7, 65, 67) elastische Biegelager (8, 8a, 8b) oder elastische Parallellenkerabschnitte (75) ausgebildet oder angeordnet sind, und dass am feststehenden Parallelschenkel (7, 67) und/oder am beweglichen Paralielschenkel (4, 65) durch Aussparungen (9, 10, 11, 30a, 30b, 30c, 30d, 40, 63, 73) mindestens ein Justierbereich (14, 14a, 14b, 34, 44, 54) ausgebildet ist, wobei die den Justierbereich bildenden Aussparungen (9, 10, 11, 30a, 30b, 30c, 30d, 63, 73) mindestens eine Deformationsstelle (12, 32a, 32b, 42, 62, 72) begrenzen, **dadurch gekennzeichnet, dass** diese Deformationsstelle (12, 32a, 32b, 42, 62, 72) falls notwendig, durch Einwirkung einer Justierkraft oder eines Justiermomentes in kontrollierter Weise plastisch verformt wird, wobei durch die plastische Verformung der mindestens einen Deformationsstelle (12, 32a, 32b, 42, 63, 73) zur Korrektur eines Eckenlastfehlers eine gezielte, bleibende Änderung in der gegenseitigen Lage der Parallellenker (5, 6, 78, 79) erreicht und in justiertem Zustand eine, zumindest bei unbelastetem beweglichem Parallelschenkel (4, 55, 65) spannungsfreie Deformationsstelle (12, 32a, 32b, 42, 62, 72) erzielt wird.

19. Verfahren nach Anspruch 18, **gekennzeichnet durch** die Verfahrensschritte:
a) dass die fertig montierte Parallelführung (1, 31, 41, 51, 61) mit einer Kraftmesszelle und einem Lastaufnehmer (57, 74) wirkverbunden, und die Kraftmesszelle an ein dazu passendes elektronisches Auswerte- und Anzeigegerät angeschlossen wird;
b) dass ein Testgewicht (99) zwischen zwei in der Längsrichtung (L) der Parallelführung (1, 31, 41, 51, 61) einander gegenüberliegenden Positionen auf einer mit der Parallelführung (1, 31, 41, 51, 61) verbundenen horizontalen Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Längsrichtung (L) registriert werden;
c) falls der in Schritt b) registrierte Eckenlastfehler innerhalb der vorgeschriebenen Toleranz liegt, mit Schritt e) weitergefahren wird, andernfalls mit Schritt d) weitergefahren wird;
d) dass zur Korrektur des in b) registrierten Eckenlastfehlers in Längsrichtung (L) eine entsprechende Justiereinstellung vorgenommen wird, wobei die beiden getrennten Justierbereiche parallel verstellt werden und die Verstellung bezüglich Grösse und Richtungssinn von dem zu korrigierenden Eckenlastfehler abhängt, worauf anschliessend der Verfahrenszyklus mit Schritt b) fortgesetzt wird;
e) dass das Testgewicht (99) zwischen zwei in der Querrichtung (Q) der Parallelführung (1, 31, 41, 51, 61) einander gegenüberliegenden Positionen auf der Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Querrichtung (Q) registriert werden;
f) falls der im ersten Durchlauf von Schritt e) registrierte Eckenlastfehler innerhalb der vorgeschriebenen Toleranz liegt, das Verfahren beendet wird, falls der im zweiten oder in einem späteren Durchlauf von Schritt e) registrierte Eckenlastfehler innerhalb der vorgeschriebenen Toleranz liegt, mit Schritt h) weitergefahren wird, und falls der im Schritt e) registrierte Eckenlastfehler ausserhalb der Toleranz liegt, mit Schritt g) weitergefahren wird;
g) dass zur Korrektur des in Schritt e) registrierten Eckenlastfehlers in Querrichtung (Q) eine entsprechende Justiereinstellung vorgenommen wird, wobei die beiden getrennten Justierbereiche gleich stark, jedoch in entgegen gesetztem Sinn verstellt werden und die Verstellung bezüglich Grösse und Richtungssinn von dem zu korrigierenden Eckenlastfehler in Querrichtung abhängt, worauf anschliessend der Verfahrenszyklus mit Schritt e) fortgesetzt wird;
h) dass zur Überprüfung, dass **durch** eine Justiereinstellung für die Querrichtung (Q) nicht wieder ein Eckenlastfehler in der Längsrichtung (L) verursacht wurde, der Eckenlastfehler für die Längsrichtung (L) erneut ermittelt wird und wenn nötig Nacheinstellungen und weitere Nachprüfungen vorgenommen werden, bis beide Eckenlastfehler innerhalb der Toleranz liegen.

20. Verfahren nach Anspruch 18, **gekennzeichnet durch** die Verfahrensschritte:
a) dass die fertig montierte Parallelführung (1, 31, 41, 51, 61) mit einer Kraftmesszelle und einem Lastaufnehmer (57, 74) wirkverbunden, und die Kraftmesszelle an ein dazu passendes elektronisches Auswerte- und Anzeigegerät angeschlossen wird;
b) dass ein Testgewicht (99) zwischen zwei in der Längsrichtung (L) der Parallelführung (1, 31, 41, 51, 61) einander gegenüberliegenden Positionen auf einer mit der Parallelführung (1, 31, 41, 51, 61) verbundenen horizontalen Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Längsrichtung (L) registriert werden;
c) dass das Testgewicht (99) zwischen zwei in der Querrichtung (Q) der Parallelführung (1, 31, 41, 51, 61) einander gegenüberliegenden Positionen auf der Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Querrichtung (Q) registriert werden;
d) falls die in Schritt b) und Schritt c) registrierten Eckenlastfehler innerhalb der vorgeschriebenen Toleranz liegen, das Verfahren beendet wird, andernfalls mit Schritt e) weitergefahren wird;
e) dass nur für den absolut grösseren der beiden in Schritt b) und Schritt c) registrierten Eckenlastfehler eine Justiereinstellung vorgenommen wird, wobei die beiden getrennten Justierbereiche bei einem Eckenlastfehler in Längsrichtung (L) parallel und bei einem Eckenlastfehler in Querrichtung (Q) antiparallel verstellt werden und die Verstellung bezüglich Grösse und Richtungssinn von dem zu korrigierenden Eckenlastfehler abhängt, worauf anschliessend der Verfahrenszyklus mit Schritt b) fortgesetzt wird.

21. Verfahren nach Anspruch 18, **gekennzeichnet durch** die Verfahrensschritte:
a) dass die fertig montierte Parallelführung (1, 31, 41, 51, 61) mit einer Kraftmesszelle und einem Lastaufnehmer (57, 74) wirkverbunden, und die Kraftmesszelle an ein dazu passendes elektronisches Auswerte- und Anzeigegerät angeschlossen wird;
b) dass ein Testgewicht (99) zwischen zwei in der Längsrichtung (L) der Parallelführung (1, 31, 41, 51, 61) einander gegenüberliegenden Positionen auf einer mit der Parallelführung (1, 31, 41, 51, 61) verbundenen horizontalen Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Längsrichtung (L) registriert werden;
c) dass das Testgewicht (99) zwischen zwei in der Querrichtung (Q) der Parallelführung (1, 31, 41, 51, 61) einander gegenüberliegenden Positionen auf der Lastaufnehmerplatte (57, 74) verschoben wird, wobei jeweils die zugehörige Gewichtsanzeige notiert und die algebraische Differenz zwischen den zwei notierten Gewichtsanzeigen als Eckenlastfehler für die Querrichtung (Q) registriert werden;
d) dass aus den in Schritt b) und Schritt c) ermittelten Gewichtswerten die Eckenlastfehler sowohl für die Längsrichtung (L) als auch für die Querrichtung (Q) bestimmt werden, worauf falls beide Eckenlastfehler innerhalb der Toleranz liegen das Verfahren beendet und andernfalls mit Schritt e) das Verfahren fortgesetzt wird;
e) dass aus den in Schritt d) ermittelten Eckenlastfehlerwerten die erforderlichen Justiereinstellungen sowohl für die Längsrichtung (L) als auch für die Querrichtung (Q) unter Berücksichtigung ihrer gegenseitigen Beeinflussung berechnet und gegebenenfalls angezeigt werden, woraufhin diese Einstellungen vollzogen werden und das Verfahren zyklisch zum Schritt b) zurückkehrt.

## Claims

1. Parallel-guiding mechanism (1, 31, 41, 51, 61) comprising a movable parallel leg (4, 55, 65) that is connected to a stationary parallel leg (7, 67) by two parallel guides (5, 6, 78, 79) and thereby constrained in guided vertical movement, wherein elastic flexure pivots (8, 8a, 8b) or elastic parallel guide sections (75) are formed or arranged in the areas of connection between the parallel guides(5, 6, 78, 79) and the parallel legs (4, 7, 65, 67), and wherein at least one adjustment domain (14, 14a, 14b, 34, 44, 54) is formed by at least one incision (9, 10, 11, 30a, 30b, 30c, 30d, 40, 63, 73) at the stationary parallel leg (7, 67) and/or at the movable parallel leg (4, 55, 65), and wherein at least one incision (9, 10, 11, 30a, 30b, 30c, 30d, 40, 63, 73) delimits at least one deformation zone (12, 32a, 32b, 42, 62, 72), **characterized in that**
- said at least one deformation zone (12, 32a, 32b, 42, 62, 72) is plastically deformed in a controlled manner through application of an adjustment force or an adjustment torque,
- as a result of the plastic deformation of the at least one deformation zone (12, 32a, 32b, 42, 62, 72), a controlled permanent change is produced in the position of the parallel guides (5, 6, 78, 79) in relation to each other, wherein said change serves to correct a corner load error of the parallel-guiding mechanism,
- in the adjusted state, the at least one deformation zone (12, 32a, 32b, 42, 62, 72) is stress-free at least when there is no load applied to the movable parallel leg (4, 55, 65).

2. Parallel-guiding mechanism (1, 31, 41, 51, 61) according to claim 1, **characterized in that** the incisions (9, 10, 11, 30a, 30b, 30c, 30d, 40, 63, 73) that form the adjustment domain (14, 14a, 14b, 34, 44, 54) reduce the material strength of the stationary parallel leg (7, 67) and/or of the movable parallel leg (4, 74) in at least one suitable location.

3. Parallel-guiding mechanism (1, 31, 41, 51) according to claim 1 or 2, **characterized in that** the at least one deformation zone (12, 32a, 32b, 42) is formed by incisions (9, 10, 30a, 30b, 30c, 30d, 40) traversing the parallel leg (4, 7) horizontally, further **characterized in that** by applying a force or a torque, the adjustment domain (14, 14a, 14b, 34, 44, 54) can be given a tilt about a tilt axis (D) that is defined by the deformation zone (12, 32a, 32b, 42) in the transverse direction (Q) of the parallel-guiding mechanism (1), wherein as a result of said tilting the end of one of the parallel guides (5, 6) which connects to the adjustment domain (14, 14a, 14b, 34, 44, 54) receives a permanent offset in the vertical direction (V), whereby a corner load errors in the lengthwise direction (L) of the parallel-guiding mechanism (1, 31, 41, 51) can in essence be corrected.

4. Parallel-guiding mechanism (1, 31, 41, 51) according to claim 3, **characterized in that** the tilt axis (D) of the deformation zone (12) is arranged on the same horizontal plane as the elastic flexure pivot (8, 8a, 8b) which is to be offset in the vertical direction.

5. Parallel-guiding mechanism (1) according to one of the claims 1 to 4, **characterized in that** the adjustment domain (14) is traversed by a further incision (11) at the vertically adjustable end of the parallel guide (5) which connects to the adjustment domain (14), wherein the further incision extends in the lengthwise vertical median plane of the movable parallel leg (4) or of the stationary parallel leg (7) and reaches as far as the elastic flexure pivot, and wherein as a result of the further incision two separate adjustment domains (14a, 14b) with separate deformation zones (12a, 12b) are formed adjacent to each other, so that:
- on the one hand, by applying parallel forces or torques to the two separate, adjacent adjustment domains (14a, 14b) and thus imparting a parallel tilt adjustment to them, a permanent parallel vertical offset of the elastic flexure pivot (8) can be produced, whereby a corner load error in the lengthwise direction (L) of the parallel-guiding mechanism can be corrected, and
- on the other hand, by applying anti-parallel forces or torques to the two separate, adjacent adjustment domains (14a, 14b) and thus imparting opposite tilt adjustments to them, a permanent twist can be given to the movable end of the parallel guide, whereby a corner load error in the transverse direction (Q) of the parallel-guiding mechanism can be corrected.

6. Parallel-guiding mechanism (1) according to claim 5, **characterized in that** the elastic flexure pivot (8) at the vertically adjustable end of the parallel guide (5) which connects to the adjustment domain (14) is split by continuing the further incision (11) as far as the parallel guide (5) or that the elastic flexure pivot (8) is provided with a perforation (16), whereby the elastic flexure pivot (8) is bisected into two adjacent elastic flexure pivots (8a, 8b).

7. Parallel-guiding mechanism (31) according to claim 1 or 2, **characterized in that** a first deformation zone (32a) is formed in a first horizontal plane (38a) by horizontal incisions (30a, 30b) so that, by applying a force or a torque, a tilt adjustment of the adjustment domain (34) can be effected relative to a tilt axis (D) that is defined by the first deformation zone (32a) in the transverse direction (Q) of the parallel-guiding mechanism (31), and further **characterized in that** a second deformation zone (32b) which is perpendicular to the orientation of the first deformation zone (32a) is formed in a second horizontal plane by horizontal incisions (30c, 30d) so that, by applying a force or a torque, a tilt adjustment of the adjustment domain (34) can be effected relative to the tilt axis (A) that is defined by the second deformation zone (32b) in the lengthwise direction (L) of the parallel-guiding mechanism (31).

8. Parallel-guiding mechanism (61) according to claim 1 or 2, **characterized in that** the stationary parallel leg (67) surrounds the movable parallel leg (65) at least in a horizontal plane.

9. Parallel-guiding mechanism (41, 61) according to one of the claims 1, 2 or 8, **characterized in that** the at least one deformation zone (42, 62, 72) is formed by a recess (40) formed around the circumference of the stationary parallel leg (47, 67) and/or of the movable parallel leg (65).

10. Parallel-guiding mechanism (1, 31, 41, 51, 61) according to one of the claims 1 to 9, **characterized in that** the at least one adjustment domain (14, 14a, 14b, 34, 44, 54) is formed in an upper portion of the stationary parallel leg (7, 67) and/or of the movable parallel leg (4, 65), whereby the end of the upper parallel guide (5, 78) that connects to the at least one adjustment domain (14, 14a, 14b, 34, 44, 54) is made adjustable.

11. Parallel-guiding mechanism (1, 31, 41, 51, 61) according to one of the claims 1 to 10, **characterized in that** the at least one adjustment domain (14, 14a, 14b, 34, 44, 54) is formed in an lower portion of the stationary parallel leg (7, 67) and/or of the movable parallel leg (4, 65), whereby the end of the lower parallel guide (6, 79) that connects to the at least one adjustment domain (14, 14a, 14b, 34, 44, 54) is made adjustable.

12. Parallel-guiding mechanism (1, 31, 41, 51, 61) according to one of the claims 1 to 11, **characterized in that** the at least one adjustment domain (14, 14a, 14b, 34, 44, 54) is provided with at least one gripping location for the engagement of an adjustment tool, preferably a lever, to generate the adjustment force or the adjustment torque.

13. Parallel-guiding mechanism (1, 31, 41, 51, 61) according to claim 12, **characterized in that** the at least one gripping location is configured as a bore hole (13a, 13b, 48) which can be engaged by a pin of the adjustment tool.

14. Parallel-guiding mechanism (1, 31, 41, 51, 61) according to one of the claims 1 to 13, **characterized in that** the parallel-guiding mechanism (1, 31, 41, 51, 61) and possibly further force-transmitting elements are made of one piece formed out of a block of material (3).

15. Parallel-guiding mechanism (1, 31, 41, 51, 61) according to claim 14, **characterized in that** the parallel-guiding mechanism (1, 31, 41, 51, 61) and the incisions (9, 10, 11, 30a, 30b, 30c, 30d, 63, 73) that form the adjustment domain (14, 14a, 14b, 34, 44, 54) are produced by narrow linear cuts traversing the material block.

16. Parallel-guiding mechanism (1, 31, 41, 51, 61) according to one of the claims 1 to 13, **characterized in that** the at least one deformation zone (12, 32a, 32b, 42, 62, 72) is immobilized and secured by at least one means of fixation (39).

17. Gravimetric measuring instrument with a parallel-guiding mechanism (1, 31, 41, 51, 61) according to one of the claims 1 to 16.

18. Method of adjusting a parallel-guiding mechanism (1, 31, 41, 51, 61) with a movable parallel leg (4, 55, 65) that is connected to a stationary parallel leg (7, 67) by two parallel guides (5, 6, 78, 79) and thereby constrained in guided vertical movement, wherein elastic flexure pivots (8, 8a, 8b) or elastic parallel guide sections (75) are formed or arranged in the areas of connection between the parallel guides (5, 6, 78, 79) and the parallel legs (4, 7, 65, 67), and wherein at least one adjustment domain (14, 14a, 14b, 34, 44, 54) is formed by incisions (9, 10, 11, 30a, 30b, 30c, 30d, 40, 63, 73) at the stationary parallel leg (7, 67) and/or at the movable parallel leg (4, 55, 65), and wherein the incisions (9, 10, 11, 30a, 30b, 30c, 30d, 40, 63, 73) that form the adjustment domain delimit at least one deformation zone (12, 32a, 32b, 42, 62, 72), **characterized in that** said deformation zone (12, 32a, 32b, 42, 62, 72) is, if necessary, subjected to a controlled plastic deformation through application of an adjustment force or an adjustment torque, wherein as a result of the plastic deformation of the at least one deformation zone (12, 32a, 32b, 42, 62, 72), a controlled permanent change is achieved in the position of the parallel guides (5, 6, 78, 79) in relation to each other, said change serving to correct a corner load error, and wherein in the adjusted state, a stress-free condition of the deformation zone (12, 32a, 32b, 42, 62, 72) is achieved at least as long as there is no load applied to the movable parallel leg (4, 55, 65).

19. Method according to claim 12, **characterized by** the following process steps wherein:
a) the completely assembled parallel-guiding mechanism (1, 31, 41, 51, 61) is operationally connected to a force-measuring cell and a load receiver (57, 74), and the force-measuring cell is connected to a compatible electronic signal-processing and indicator unit;
b) a test weight (99) is shifted between two positions on a horizontal load receiver plate (57, 74) connected to the parallel-guiding mechanism (1, 31, 41, 51, 61), said positions lying diametrically opposite each other in the longitudinal direction (L) of the parallel-guiding mechanism (1, 31, 41, 51, 61), wherein readings of the indicated weight are taken and the algebraic difference between the two weight readings is recorded as corner load error for the longitudinal direction (L);
c) if the corner load error recorded in step b) is found within the prescribed tolerance, the process is continued at step e), else at step d);
d) for the correction of the corner load error in the longitudinal direction (L) as recorded in step b), a corresponding adjustment is made, wherein parallel corrections are applied to the two separate adjustment domains, with the correction depending in regard to its magnitude and direction on the corner load error to be corrected, whereupon the adjustment cycle loops back to step b);
e) the test weight (99) is shifted between two positions on a horizontal load receiver plate (57, 74) connected to the parallel-guiding mechanism (1, 31, 41, 51, 61), said positions lying diametrically opposite each other in the transverse direction (Q) of the parallel-guiding mechanism (1, 31, 41, 51, 61), wherein a reading of the indicated weight is taken and the algebraic difference between the two weight readings is recorded as corner load error for the transverse direction (Q);
f) if the corner load error recorded in the first pass of step e) is found within the prescribed tolerance, the process terminated, else if the corner load error recorded in the second pass or in a later pass of step e) is found within the prescribed tolerance, the process is continued at step h), or else if the corner load error recorded in step e) is found out of tolerance, the process is continued at step g);
g) for the correction of the corner load error in the transverse direction (Q) as recorded in step e), a corresponding adjustment is made, wherein corrections of equal magnitude but opposite direction are applied to the two separate adjustment domains, with the corrections depending in regard to their magnitude and directional orientation on the corner load error in the transverse direction that is to be corrected, whereupon the adjustment cycle loops back to step e);
h) to verify that the adjustment in the transverse direction (Q) has not again caused a corner load error in the lengthwise direction (L), the corner load error for the lengthwise direction (L) is determined anew and, if necessary, readjustments and further verifications are carried out until both corner load errors are within tolerance.

20. Method according to claim 18, **characterized by** the following process steps wherein:
a) the completely assembled parallel-guiding mechanism (1, 31, 41, 51, 61) is operationally connected to a force-measuring cell and a load receiver (57, 74), and the force-measuring cell is connected to a compatible electronic signal-processing and indicator unit;
b) a test weight (99) is shifted between two positions on a horizontal load receiver plate (57, 74) connected to the parallel-guiding mechanism (1, 31, 41, 51, 61), said positions lying diametrically opposite each other in the longitudinal direction (L) of the parallel-guiding mechanism (1, 31, 41, 51, 61), wherein readings of the indicated weight are taken and the algebraic difference between the two weight readings is recorded as corner load error for the longitudinal direction (L);
c) the test weight (99) is shifted between two positions on a horizontal load receiver plate (57, 74) connected to the parallel-guiding mechanism (1, 31, 41, 51, 61), said positions lying diametrically opposite each other in the transverse direction (Q) of the parallel-guiding mechanism (1, 31, 41, 51, 61), wherein readings of the indicated weight are taken and the algebraic difference between the two weight readings is recorded as corner load error for the transverse direction (Q);
d) if the corner load errors recorded in steps b) and c) are found within the prescribed tolerance, the process is terminated, else the process is continued at step e);
e) an adjustment is made only for the corner load error with the larger absolute value of the two corner load errors recorded in steps b) and c), wherein parallel corrections are applied to the two separate adjustment domains in case of a corner load error in the lengthwise direction (L), and anti-parallel corrections are applied to the two separate adjustment domains in case of a corner load error in the transverse direction (Q), with the correction depending in regard to its magnitude and directional orientation on the corner load error to be corrected, whereupon the adjustment cycle loops back to step b).

21. Method according to claim 18, **characterized by** the following process steps wherein:
a) the completely assembled parallel-guiding mechanism (1, 31, 41, 51, 61) is operationally connected to a force-measuring cell and a load receiver (57, 74), and the force-measuring cell is connected to a compatible electronic signal-processing and indicator unit;
b) a test weight (99) is shifted between two positions on a horizontal load receiver plate (57, 74) connected to the parallel-guiding mechanism (1, 31, 41, 51, 61), said positions lying diametrically opposite each other in the longitudinal direction (L) of the parallel-guiding mechanism (1, 31, 41, 51, 61), wherein readings of the indicated weight are taken and recorded for the two positions;
c) the test weight (99) is shifted between two positions on a horizontal load receiver plate (57, 74) connected to the parallel-guiding mechanism (1, 31, 41, 51, 61), said positions lying diametrically opposite each other in the transverse direction (Q) of the parallel-guiding mechanism (1, 31, 41, 51, 61), wherein readings of the indicated weight are taken and recorded for the two positions;
d) based on the weight values determined in steps b) and c), the corner load errors for the longitudinal direction (L) as well as for the transverse direction (Q) are determined, whereupon if both corner load errors are found within tolerance, the process is terminated, else the process is continued at step e);
e) based on the values of the corner load errors determined in step d) the adjustments required to correct the corner load error in the longitudinal direction (L) as well as the corner load error in the transverse direction (Q) are calculated and can be displayed on an indicator, wherein the mutual influence that the two adjustments have on each other is taken into account in the calculation, whereupon the adjustments are executed and the process cycle loops back to step b).

## Revendications

1. Guidage parallèle (1, 31, 41, 51, 61) avec une branche parallèle mobile (4, 55, 65), laquelle est reliée à une branche parallèle fixe (7, 67) par deux bras parallèles (5, 6, 78, 79) tout en étant guidée verticalement, des paliers flexibles élastiques (8, 8a, 8b) ou des sections de bras parallèles élastiques (75) étant formés ou agencés au niveau des jonctions entre les bras parallèles (5, 6, 78, 79) et les branches parallèles (4, 7, 65, 67), au moins une région d'ajustement (14, 14a, 14b, 34, 44, 54) étant formée par au moins un évidement (9, 10, 11, 30a, 30b, 30c, 30d, 40, 63, 73) sur la branche parallèle fixe (7, 67) et/ou sur la branche parallèle mobile (4, 55, 65), et au moins un évidement (9, 10, 11, 30a, 30b, 30c, 30d, 40, 63, 73) délimitant au moins une zone de déformation (12, 32a, 32b, 42, 62, 72), **caractérisé en ce que**
• l'au moins une zone de déformation (12, 32a, 32b, 42, 62, 72) est déformée plastiquement de façon contrôlée par l'action d'une force d'ajustement ou d'un couple d'ajustement,
• la déformation plastique de l'au moins une zone de déformation (12, 32a, 32b, 42, 62, 72) produit une modification permanente ciblée de la position réciproque des bras parallèles (5, 6, 78, 79), destinée à corriger une erreur de charge d'angle du guidage parallèle (1, 31, 41, 51, 61), et
• l'au moins une zone de déformation (12, 32a, 32b, 42, 62, 72) est exempte de tension à l'état ajusté, au moins lorsque la branche parallèle mobile (4, 55, 65) n'est pas chargée.

2. Guidage parallèle (1, 31, 41, 51, 61) selon la revendication 1, **caractérisé en ce que** les évidements (9, 10, 11, 30a, 30b, 30c, 30d, 40, 63, 73) formant la région d'ajustement (14, 14a, 14b, 34, 44, 54) réduit l'épaisseur de matériau de la branche parallèle fixe (7, 67) et/ou de la branche parallèle mobile (4, 74) dans au moins une zone appropriée.

3. Guidage parallèle (1, 31, 41, 51) selon la revendication 1 ou 2, **caractérisé en ce que** l'au moins une zone de déformation (12, 32a, 32b, 42) est formée par des évidements (9, 10, 30a, 30b, 30c, 30d, 40) traversant horizontalement la branche parallèle (4, 7), **en ce que** l'application de forces et de couples permettent de faire pivoter la région d'ajustement (14, 14a, 14b, 34, 44, 54) autour de l'axe de pivotement (D) défini par la zone de déformation (12, 32a, 32b, 42) dans la direction transversale (Q) du guidage parallèle (1), l'extrémité de l'un des bras parallèles (5, 6) débouchant sur la région d'ajustement (14, 14a, 14b, 34, 44, 54) étant déplacée de façon permanente dans la direction verticale (V) suite audit pivotement, moyennant quoi une erreur de charge d'angle peut être corrigée sensiblement par rapport au sens longitudinal (L) du guidage parallèle (1, 31, 41, 51).

4. Guidage parallèle (1, 31, 41, 51) selon la revendication 3, **caractérisé en ce que** l'axe de pivotement (D) de la zone de déformation (12) s'étend sur le même plan horizontal que le palier flexible élastique (8, 8a, 8b) à déplacer dans la direction verticale.

5. Guidage parallèle (1) selon l'une des revendications 1 à 4, **caractérisé en ce qu'**à l'extrémité du bras parallèles (5) déplaçable verticalement et débouchant sur la région d'ajustement (14), la région d'ajustement (14) est traversée par un autre évidement (11) s'étendant dans la surface de coupe longitudinale médiane verticale de la branche parallèle mobile (4) ou de la branche parallèle fixe (7), jusqu'au palier flexible élastique, l'autre évidement (11) formant deux région d'ajustement (14a, 14b) juxtaposées séparées avec des zone de déformation (12a, 12b) séparées, de telle sorte que :
• un déplacement vertical parallèle permanent du palier flexible élastique (8) peut d'une part être produit par l'application d'une force ou d'un couple parallèle à deux région d'ajustement (14a, 14b) juxtaposées séparées, et donc par un pivotement parallèle de celles-ci, permettant ainsi de corriger une erreur de charge d'angle par rapport au sens longitudinal (L) du guidage parallèle ; et
une torsion permanente de l'extrémité de bras parallèle réglable peut d'autre part être produite par l'application d'une force ou d'un couple antiparallèle aux deux régions d'ajustement (14a, 14b) juxtaposées séparées, et par le pivotement opposé des régions d'ajustement (14a, 14b) ainsi produit, permettant ainsi de corriger une erreur de charge d'angle par rapport au sens transversal (Q) du guidage parallèle.

6. Guidage parallèle (1) selon la revendication 5, **caractérisé en ce qu'**à l'extrémité du bras parallèle (5) réglable verticalement et débouchant sur la région d'ajustement (14), le palier flexible élastique (8) est divisé en deux paliers flexibles élastiques (8a, 8b) juxtaposés séparés, par le prolongement de l'autre évidement (11) jusqu'au bras parallèle (5) ou la présence d'une brèche (16).

7. Guidage parallèle (31) selon la revendication 1 ou 2, **caractérisé en ce qu'**une première zone de déformation (32a) est formée par des évidements (30a, 30b) horizontalement traversants dans un premier plan horizontal (38a), de sorte que l'application d'une force ou d'un couple permet de produire un pivotement de la région d'ajustement (34) autour de l'axe de pivotement (D) défini par la première zone de déformation (32a) dans le sens transversal (Q) du guidage parallèle (31), et **en ce que** dans un deuxième plan horizontal, s'étendant orthogonalement à l'orientation de la première zone de déformation (32a), une deuxième zone de déformation (32b) est formée par des évidements (30c, 30d) horizontalement traversants, de sorte que l'application d'une force ou d'un couple permet de produire un pivotement de la région d'ajustement (34) autour de l'axe de pivotement (A) défini par la deuxième zone de déformation (32b) dans le sens longitudinal (L) du guidage parallèle (31).

8. Guidage parallèle (61) selon la revendication 1 ou 2, **caractérisé en ce que** la branche parallèle fixe (67) entoure la branche parallèle mobile (65) au moins dans un plan horizontal.

9. Guidage parallèle (41, 61) selon l'une des revendications 1, 2 ou 8, **caractérisé en ce que** l'au moins une zone de déformation (42, 62, 72) est formée par un évidement périphérique (40) dans la branche parallèle fixe (47, 67) et/ou dans la branche parallèle mobile (65).

10. Guidage parallèle (1, 31, 41, 51, 61) selon l'une des revendications 1 à 9, **caractérisé en ce que** l'au moins une région d'ajustement (14, 14a, 14b, 34, 44, 54) est formée dans une partie supérieure de la branche parallèle fixe (7, 67) et/ou de la branche parallèle mobile (4, 65), le bras parallèle supérieur (5, 78) pouvant ainsi être réglé à son extrémité débouchant sur l'au moins une région d'ajustement (14, 14a, 14b, 34, 44, 54).

11. Guidage parallèle (1, 31, 41, 51, 61) selon l'une des revendications 1 à 10, **caractérisé en ce que** l'au moins une région d'ajustement (14, 14a, 14b, 34, 44, 54) est formée dans une partie inférieure de la branche parallèle fixe (7, 67) et/ou de la branche parallèle mobile (4, 65), le bras parallèle inférieur (6, 79) pouvant ainsi être réglé à son extrémité débouchant sur l'au moins une région d'ajustement (14, 14a, 14b, 34, 44, 54).

12. Guidage parallèle (1, 31, 41, 51, 61) selon l'une des revendications 1 à 11, **caractérisé en ce que** l'au moins une région d'ajustement (14, 14a, 14b, 34, 44, 54) est pourvue d'au moins un point d'attaque pour la pose d'un outil de dressage, de préférence un levier, pour produire la force d'ajustement ou le couple d'ajustement.

13. Guidage parallèle (1, 31, 41, 51, 61) selon la revendication 12, **caractérisé en ce que** l'au moins un point d'attaque est formé comme un puits (13a, 13b, 48), dans lequel une tige de l'outil de dressage peut s'engager.

14. Guidage parallèle (1, 31, 41, 51, 61) selon l'une des revendications 1 à 13, **caractérisé en ce que** le guidage parallèle (1, 31, 41, 51, 61) et le cas échéant des éléments de transmission de force sont formés d'une seule pièce à partir d'un bloc de matériau (3).

15. Guidage parallèle (1, 31, 41, 51, 61) selon la revendication 14, **caractérisé en ce que** le guidage parallèle (1, 31, 41, 51, 61) et les évidements (9, 10, 11, 30a, 30b, 30c, 30d, 40, 63, 73) formant la région d'ajustement (14, 14a, 14b, 34, 44, 54) sont formés par d'étroites coupures de séparation.

16. Guidage parallèle (1, 31, 41, 51, 61) selon l'une des revendications 1 à 13, **caractérisé en ce que** l'au moins une zone de déformation (12, 32a, 32b, 42, 62, 72) est fixée et sécurisée à l'aide d'au moins un moyen de fixation (39).

17. Instrument de mesure gravimétrique comprenant un guidage parallèle (1, 31, 41, 51, 61) selon l'une des revendications 1 à 16.

18. Procédé destiné à ajuster la précision de charge d'angle d'un guidage parallèle (1, 31, 41, 51, 61) comprenant une branche parallèle mobile (4, 65) reliée à une branche parallèle fixe (7, 67) par deux bras parallèles (5, 6, 78, 79) tout en étant guidée verticalement, des paliers flexibles élastiques (8, 8a, 8b) ou des sections de bras parallèles élastiques (75) étant formés ou agencés au niveau des jonctions entre les bras parallèles (5, 6, 78, 79) et les branches parallèles (4, 7, 65, 67), et dans lequel au moins une région d'ajustement (14, 14a, 14b, 34, 44, 54) est formée par des évidements (9, 10, 11, 30a, 30b, 30c, 30d, 40, 63, 73) sur la branche parallèle fixe (7, 67) et/ou sur la branche parallèle mobile (4, 65), les évidements (9, 10, 11, 30a, 30b, 30c, 30d, 40, 63, 73) formant la région d'ajustement délimitant au moins une zone de déformation (12, 32a, 32b, 42, 62, 72), **caractérisé en ce que** cette zone de déformation (12, 32a, 32b, 42, 62, 72) est, si nécessaire, déformée plastiquement de façon contrôlée par l'application d'une force d'ajustement ou d'un couple d'ajustement, cette déformation plastique de l'au moins une zone de déformation (12, 32a, 32b, 42, 62, 72) permettant d'effectuer une modification permanente ciblée dans la position réciproque des bras parallèles (5, 6, 78, 79), et d'obtenir une zone de déformation (12, 32a, 32b, 42, 62, 72) exempte de tensions au moins lorsque la branche parallèle mobile (4, 55, 65) n'est soumis à aucune charge étant obtenue à l'état ajusté.

19. Procédé selon la revendication 18, **caractérisé par** les étapes de procédé suivantes :
a) une fois monté, le guidage parallèle (1, 31, 41, 51, 61) est relié fonctionnellement à une cellule dynamométrique et un récepteur de charge (57, 74), et la cellule dynamométrique est raccordée à un dispositif d'évaluation et d'affichage électronique approprié ;
b) un poids d'essai (99) est déplacé sur une plaque de réception de charge (57, 74) horizontale reliée au guidage parallèle (1, 31, 41, 51, 61), entre deux positions opposées dans le sens longitudinal (L) du guidage parallèle (1, 31, 41, 51, 61), l'indication de poids correspondante étant respectivement notée et la différence algébrique entre les deux indications de poids notées est enregistrée en tant qu'erreur de charge d'angle pour le sens longitudinal (L) ;
c) si l'erreur de charge d'angle enregistrée à l'étape b) tombe dans les limites de tolérance prescrites, le procédé passe à l'étape e), autrement à l'étape d) ;
d) un réglage d'ajustement approprié est effectué pour corriger l'erreur de charge d'angle dans le sens longitudinal (L) enregistrée à l'étape b), les deux zones d'ajustement séparées étant réglées parallèlement, et le réglage de la taille et de l'orientation étant effectué en fonction de l'erreur de charge d'angle à corriger, le cycle de procédé passant ensuite à l'étape b) ;
e) le poids d'essai (99) est déplacé sur la plaque de réception de charge (57, 74), entre deux positions opposées dans le sens transversal (Q) du guidage parallèle (1, 31, 41, 51, 61), l'indication de poids correspondante étant notée respectivement et la différence algébrique entre les deux indications de poids notées étant enregistrée en tant qu'erreur de charge d'angle pour le sens transversal (Q) ;
f) si l'erreur de charge d'angle enregistrée pendant la première exécution de l'étape e) tombe dans les limites de tolérance prescrites, le procédé est terminé, si l'erreur de charge d'angle enregistrée pendant la deuxième exécution ou une exécution ultérieure de l'étape e) tombe dans les limites de tolérance prescrites, le procédé passe à l'étape h), et si l'erreur de charge d'angle enregistrée à l'étape e) tombe en dehors des limites de tolérance, le procédé passe à l'étape g) ;
g) un réglage d'ajustement approprié est effectué pour corriger l'erreur de charge d'angle dans le sens transversal (Q) enregistrée à l'étape e), les deux zones d'ajustement séparées étant réglées selon le même degré, mais dans des sens inverses, et le réglage de la taille et de l'orientations étant effectué en fonction de l'erreur de charge d'angle à corriger dans le sens transversal, le cycle de procédé passant ensuite à l'étape e) ;
h) pour vérifier l'absence d'une nouvelle erreur de charge d'angle dans le sens longitudinal (L) occasionnée par un réglage d'ajustement pour le sens transversal (Q), l'erreur de charge d'angle pour le sens longitudinal (L) est à nouveau déterminée, et réglages supplémentaires et d'autres vérifications étant si nécessaire effectués, jusqu'à ce que les deux erreurs de charge d'angle tombent dans les limites de tolérance.

20. Procédé selon la revendication 18, **caractérisé par** les étapes de procédé suivantes :
a) une fois monté, le guidage parallèle (1, 31, 41, 51, 61) est relié fonctionnellement à une cellule dynamométrique et un récepteur de charge (57, 74), et la cellule dynamométrique est raccordée à un dispositif d'évaluation et d'affichage électronique approprié ;
b) un poids d'essai (99) est déplacé sur une plaque de réception de charge (57, 74) horizontale reliée au guidage parallèle (1, 31, 41, 51, 61), entre deux positions opposées dans le sens longitudinal (L) du guidage parallèle (1, 31, 41, 51, 61), l'indication de poids correspondante étant respectivement notée et la différence algébrique entre les deux indications de poids notées est enregistrée en tant qu'erreur de charge d'angle pour le sens longitudinal (L) ;
c) le poids d'essai (99) est déplacé sur la plaque de réception de charge (57, 74), entre deux positions opposées dans le sens transversal (Q) du guidage parallèle (1, 31, 41, 51, 61), l'indication de poids correspondante étant notée respectivement et la différence algébrique entre les deux indications de poids notées étant enregistrée en tant qu'erreur de charge d'angle pour le sens transversal (Q) ;
d) si les erreurs de charge d'angle enregistrées à l'étape b) et à l'étape c) tombent dans les limites de tolérance prescrites, le procédé est terminé, autrement il passe à l'étape e) ;
e) un réglage d'ajustement est effectué uniquement pour la plus grande des deux erreurs de charge d'angle absolues enregistrées au cours de l'étape b) et de l'étape c), les deux zones d'ajustement séparées étant réglées parallèlement pour une erreur de charge d'angle dans le sens longitudinal (L) et antiparallèlement pour une erreur de charge d'angle dans le sens transversal (Q), et le réglage de la taille et de l'orientation étant effectué en fonction de l'erreur de charge d'angle à corriger, le cycle de procédé passant ensuite à l'étape b).

21. Procédé selon la revendication 18, **caractérisé par** les étapes de procédé suivantes :
a) une fois monté, le guidage parallèle (1, 31, 41, 51, 61) est relié fonctionnellement à une cellule dynamométrique et un récepteur de charge (57, 74), et la cellule dynamométrique est raccordée à un dispositif d'évaluation et d'affichage électronique approprié ;
b) un poids d'essai (99) est déplacé sur une plaque de réception de charge (57, 74) horizontale reliée au guidage parallèle (1, 31, 41, 51, 61), entre deux positions opposées dans le sens longitudinal (L) du guidage parallèle (1, 31, 41, 51, 61), l'indication de poids correspondante étant respectivement notée et la différence algébrique entre les deux indications de poids notées est enregistrée en tant qu'erreur de charge d'angle pour le sens longitudinal (L) ;
c) le poids d'essai (99) est déplacé sur la plaque de réception de charge (57, 74), entre deux positions opposées dans le sens transversal (Q) du guidage parallèle (1, 31, 41, 51, 61), l'indication de poids correspondante étant notée respectivement et la différence algébrique entre les deux indications de poids notées étant enregistrée en tant qu'erreur de charge d'angle pour le sens transversal (Q) ;
d) les erreurs de charge d'angle sont déterminées aussi bien pour le sens longitudinal (L) que pour le sens transversal (Q) à partir des valeurs de poids déterminées au cours de l'étape b) et de l'étape c), et si les deux erreurs de charge d'angle tombent dans les limites de tolérance, le procédé est terminé, autrement le procédé passe à l'étape e) ;
e) les réglages d'ajustement nécessaires aussi bien pour le sens longitudinal (L) que pour le sens transversal (Q) sont calculés à partir des valeurs d'erreur de charge d'angle déterminées au cours de l'étape d) et éventuellement affichés, en tenant compte de leurs influences réciproques, après quoi ces réglages sont effectués et le procédé reprend cycliquement à l'étape b).
